# EUROPEAN PATENT SPECIFICATION

(11) **EP 3 482 602 B1**
(45) Date of publication and mention of the grant of the patent: **18.10.2023**
(21) Application number: 17736821.4
(22) Date of filing: 21.06.2017
(51) Int. Cl.: H04W 92/04, H04W 88/08, H04W 76/10

(54) **SYSTEMS, METHODS AND DEVICES FOR CONTROL-USER PLANE SEPARATION FOR 5G RADIO ACCESS NETWORKS**
SYSTEME, VERFAHREN UND VORRICHTUNGEN ZUR TRENNUNG EINER STEUERUNGSBENUTZEREBENE FÜR 5G-FUNKZUGANGSNETZWERKE
SYSTÈMES, PROCÉDÉS ET DISPOSITIFS DE SÉPARATION DE PLAN UTILISATEUR DE COMMANDE POUR DES RÉSEAUX D'ACCÈS RADIO 5G

(30) Priority: 05.07.2016 WO PCT/CN2016/088513
(43) Date of publication of application: 15.05.2019
(73) Proprietor: Apple Inc., Cupertino, CA 95014 (US)
(72) Inventor: YANG, Feng, Beijing 100190 (CN); HUANG, Min, Beijing 100086 (CN); ZHANG, Xu, Beijing 100197 (CN); SIROTKIN, Alexander, 49527 Petach Tikva (IL)
(74) Representative: Barton, Russell Glen
(86) International application number: PCT/US2017/038603
(87) International publication number: WO 2018/009340

(56) References cited:
- US-A1- 2013 294 403
- INTEL CORPORATION: "C-plane and U-plane separation in the next generation radio access network", 3GPP DRAFT; R3-161075-C-PLANE-U-PLANE SEPARATION_V0_3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160423 - 20160427 22 May 2016 (2016-05-22), XP051105885, Retrieved from the Internet: URL:http://www.3gpp.org/ftp/Meetings_3GPP_ SYNC/RAN3/Docs/ [retrieved on 2016-05-22]
- INTEL CORPORATION: "General principles of separation of CP and UP for high level functional split", 3GPP DRAFT; R3-172285-SEPARATION OF CP AND UP FOR HIGH LEVEL FUNCTIONAL SPLIT_V4, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG3, no. Qingdao, China; 20170626 - 20170628 19 June 2017 (2017-06-19), XP051307803, Retrieved from the Internet: URL:http://www.3gpp.org/ftp/tsg_ran/WG3_Iu /TSGR3_AHGs/R3_AH_NR_1706/Docs/ [retrieved on 2017-06-19]
- LG ELECTRONICS INC: "TP for RAN-CN Interface", 3GPP DRAFT; R3-161507 TP FOR RAN-CN INTERFACE_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 29 May 2016 (2016-05-29), XP051112866, Retrieved from the Internet: URL:http://www.3gpp.org/ftp/tsg_ran/WG3_Iu /TSGR3_92/Docs/ [retrieved on 2016-05-29]
- ZTE: "The capacity requirement for the interface between CU and DU", 3GPP DRAFT; R2-162625 THE CAPACITY REQUIREMENT FOR THE INTERFACE BETWEEN CU AND DU, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Dubrovnik, Croatia; 20160411 - 20160415 1 April 2016 (2016-04-01), XP051082190, Retrieved from the Internet: URL:http://www.3gpp.org/ftp/tsg_ran/WG2_RL 2/TSGR2_93bis/Docs/ [retrieved on 2016-04-01]
- ZTE: "Discussion on the protocol architecture for standalone NR", 3GPP DRAFT; R2-162623 DISCUSSION ON THE PROTOCOL ARCHITECTURE FOR STANDALONE NR, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Dubrovnik, Croatia; 20160411 - 20160415 1 April 2016 (2016-04-01), XP051082188, Retrieved from the Internet: URL:http://www.3gpp.org/ftp/tsg_ran/WG2_RL 2/TSGR2_93bis/Docs/ [retrieved on 2016-04-01]
- CATT: "Consideration onRAN Architecture in 5G NR", 3GPP DRAFT; R3-160775, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India 2 April 2016 (2016-04-02), XP051083033, Retrieved from the Internet: URL:http://www.3gpp.org/ftp/tsg_ran/WG3_Iu /TSGR3_91bis/Docs/ [retrieved on 2016-04-02]

## Description

### Technical Field

The present disclosure relates to cellular communication and more specifically to improved Radio Access Network (RAN) architecture solutions.

### Background

Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as an Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless RANs, RAN Nodes can include a 5G Node (e.g., 5G eNB or gNB).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN 104 implements GSM and/or EDGE RAT, the UTRAN 106 implements universal mobile telecommunication system (UMTS) RAT or other 3GPP RAT, and the E-UTRAN 108 implements LTE RAT.

A core network can be connected to the UE through the RAN Node. The core network can include a serving gateway (SGW), a packet data network (PDN) gateway (PGW), an access network detection and selection function (ANDSF) server, an enhanced packet data gateway (ePDG) and/or a mobility management entity (MME).

3GPP Tdoc. R3-161075, "C-plane and U-plane separation in the next generation radio access network", 3GPP TSG RAN WG3 Meeting #92, April 2016 describes the NR C-plane/U-plane separation allowing flexible RAN deployment, function virtualization and new services.

US 2013/0294403 A1 relates to long term evolution architecture and mobility. A services node (SN) is provided that functions as a local, premise-based gateway that anchors and aggregates a group of radio nodes (RNs). Accordingly, the SN absorbs the functionalities of conventional mobility management entities (MMEs), as well as serving and packet data network gateways, where the SN appears as a single virtual eNB to a macrocellular core network. As a result, complexity associated with aggregating and controlling a large number of RNs (performed by the SN) is hidden from the core network. Additionally, micro-mobility between individual RNs controlled by an SN is completely handled at a local enterprise gateway level, thus significantly reducing mobility-related signaling from impacting an MME pool in the code network. Moreover local data offloading is made possible via the SN.

3GPP Tdoc R2-162623, "Discussion on the protocol architecture for standalone NR", 3GPP TSG RAN WG3 Meeting #93bis, April 2016, proposes a central unit (CU) split in control and user plane, CU-CP and CU-UP, and discloses that control plane functionality mainly refers to functionality realized by RRC protocol and related RRM except for user plane scheduler. The document also indicates that the routing of control plane signalling could have two choices, either from CU-C node to UP and then DU node or from CU-C node to DU node directly.

### Summary

The object of the present application is solved by the independent claims. Advantageous embodiments are described by the dependent claims. Embodiments not falling under the scope of the claims should be understood as examples useful for understanding the invention.

### Brief Description of the Drawings

FIG. 1 is a diagram illustrating a RAN architecture with control plane/user plane split for air interface and backhaul consistent with embodiments disclosed herein.
FIG. 2 is a communication diagram illustrating Radio Resource Control connection establishment and Radio Resource Control connection reconfiguration during initial attach consistent with embodiments disclosed herein.
FIG. 3 is a diagram illustrating a RAN architecture with control plane/user plane split for air interface and backhaul consistent with embodiments disclosed herein.
FIG. 4 is a diagram illustrating a RAN architecture with control plane/user plane split for air interface and backhaul consistent with embodiments disclosed herein.
FIG. 5 is a communication diagram illustrating Radio Resource Control connection establishment and Radio Resource Control connection reconfiguration during initial attach consistent with embodiments disclosed herein.
FIG. 6 is a diagram of an architecture of a system of a network consistent with embodiments disclosed herein.
FIG. 7 is a diagram of example components of a device consistent with embodiments disclosed herein.
FIG. 8 is a diagram of example interfaces of baseband circuitry consistent with embodiments disclosed herein.
FIG. 9 is a diagram of a control plane protocol stack consistent with embodiments disclosed herein.
FIG. 10 is a diagram of a user plane protocol stack consistent with embodiments disclosed herein.
FIG. 11 is a diagram of a components of a core network consistent with embodiments disclosed herein.
FIG. 12 is a block diagram illustrating components of a system to support Network Functions Virtualization (NFV) consistent with embodiments disclosed herein.
FIG. 13 is a block diagram illustrating components able to read and/or execute instructions from a machine-readable or computer-readable medium consistent with embodiments disclosed herein.
FIG. 14 is a block diagram of an architecture of a system of a cellular network consistent with embodiments disclosed herein.

### Detailed Description

A detailed description of systems and methods consistent with embodiments of the present disclosure is provided below. While several embodiments are described, it should be understood that the disclosure is not limited to any one embodiment, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Techniques, apparatus and methods are disclosed that enable functions of base station (BS) to be separated into a central unit control plane (CU-CP) for control plane functions, central unit user plane (CU-UP) for user plane functions and a distribution unit (DU) for user equipment communication functions. For example, the control plane (CP) of a base station is split, centralizing part of the CP in a Central Unit (CU). The user plane (UP) of the air interface is partitioned and part of the UP of the air interface and UP of the backhaul is centralized in a CU that can be co-located with the CU hosting the CP, or in a different location, while leaving the rest of the UP of the air interface distributed (such as in a distribution unit). The acts of control plane/user plane (C/U) separation, user-plane partitioning and modular design can relieve design pressures based on latency and/or bandwidth of interfaces between different RAN parts, design pressures based on mobility among BS's, may enable flexible deployment of RAN functions, and may facilitate the virtualization of part or all of the CP and/or part or all of the UP.

Some embodiments disclosed herein service the UP and CP needs of the RAN by providing Radio Resource Control layer (RRC) functionality in a first location, Packet Data Convergence Protocol layer (PDCP) functionality in a second location, and Radio Link Control layer (RLC), Medium Access Control layer (MAC), and physical layer (PHY) functionalities in a third location.

Other embodiments may instead provide RRC functionality in a first location, PDCP and RLC functionalities in a second location, and MAC and PHY functionalities in a third location.

Other embodiments may instead provide RRC functionality in a first location, PDCP, RLC, and MAC functionalities in the second location, and PHY functionality in a third location.

Challenges faced in the transition to 5G include the issues of: 1) network configuration, management and interoperability as a radio access network (RAN) becomes ultra-dense and heterogeneous as significant numbers of small cells (SC) are added in an effort to boost the peak data rate up to 10 Gbps; and 2) mobility management due to the limited coverage of a single SC coupled with the huge number of cells, leaving a single MME approach insufficient to provision robust mobility.

Cloud RAN (CRAN) centralizes a baseband unit (BBU) of base stations (BS) in a shared computing environment. CRAN utilizes cloud computing technologies to consolidate BBU resources, and can provide a pooling gain (i.e. saving of computing resources) as well as a performance gain. These gains can be achieved by enabling advanced algorithms e.g. Coordinated Multi-Point Joint Transmission (CoMP JT) and joint reception (JR). However, the ultra-high bandwidth for fronthaul for the interface between a central office and radio remote head (RRH) implies that CRANs are difficult to deploy everywhere, especially in a 5G scenario where the throughput of an mmWave is anticipated up to 10Gbps. Another drawback of CRAN can be that not all the building blocks of a BBU are amenable for being centralized and virtualized, due to processing latency.

Some systems centralize a control plane (CP) of underlying base stations (BS) from radio resource control layer (RRC), remote radio management layer (RRM) down to physical layer (PHY), in a software defined central controller which owns a global view of users and radio resources. It is potentially able to provision optimal performance in theory when performing load balance, interference management, etc. Compared with CRAN, the requirement on fronthaul bandwidth may be relieved. However, a pooling gain, due to the centralization of baseband, may be lost in such embodiments.

As compared with CRAN and a software defined central controller, some embodiments herein disclosed neither specify a fronthaul of ultra-high bandwidth nor specify a signaling interface with latency no more than 1ms for LTE or 0.1 ms for 5G. Embodiments herein disclosed re-architectured RANs which may approach these figures through the flexible deployment of various RAN functions and through virtualizing the CP and at least part of the UP.

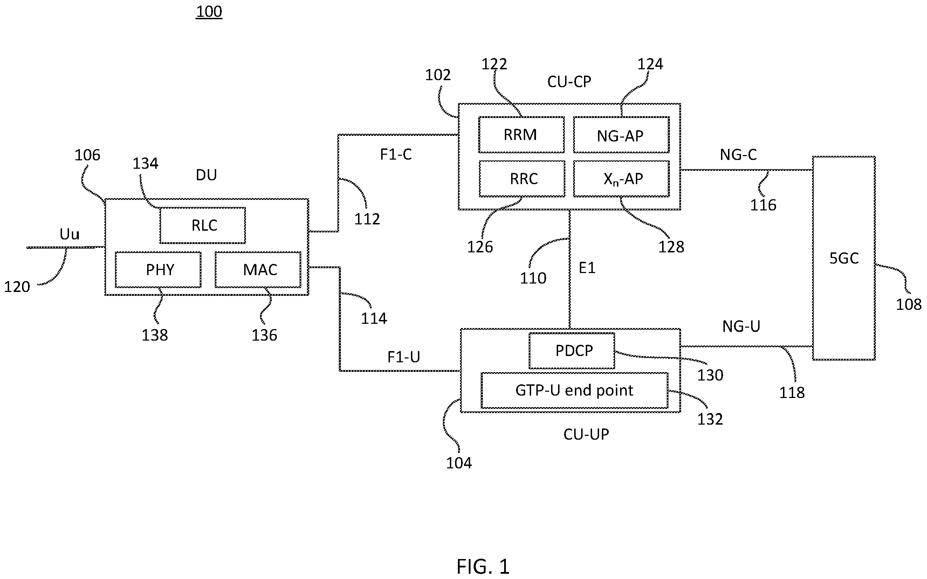

FIG. 1 is a diagram illustrating an embodiment of a RAN architecture 100 with C/U split for air interface and backhaul. RAN architecture 100 comprises Control-Plane Central Unit (CU-CP or sometimes CP-CU) 102, User-Plane of Central Unit (CU-UP or sometimes UP-CU) 104, Distributed Unit (DU) (or sometimes Remote Unit (RU)) 106, and fifth generation core network (5GC) (or sometimes 5G Core or more generically a Core Network (CN)) 108. In some embodiments, the systems described can be used in conjunction with an evolved packet core network (EPC) instead of a 5GC.

RAN architecture 100 further includes the following: an E1 interface (sometimes called an NGx interface) 110, which connects CU-CP 102 and CU-UP 104; an F1 Control plane (F1-C) interface (sometimes called an NGy interface) 112, which connects DU 106 and CU-CP 102; an F1 User plane (F1-U) interface (sometimes called an NGz interface) 114, which connects DU 106 and CU-UP 104; an NG-C interface (sometimes called an NG2 interface) 116, which connects CU-CP 102 and 5GC 108; an NG-U interface (sometimes called an NG3 interface) 118, which connects CU-UP 104 and 5GC 108; and a Uu interface 120, which is the air interface used by one or more UE (not shown) to connect to RAN architecture 100. Collectively, DU 106, CU-UP 104 and CU-CP 102 may be referred to herein as a New Radio NodeB (NR NodeB), gNodeB, a BS, or a next generation node B (gNB). The gNB can provide access to a 5G Core Network (5GC) through a Next Generation Radio Access Network (NG-RAN).

According to the embodiment, CU-CP 102 includes layers RRM 122 and RRC 126 (sometimes layers are also referred to as entities or functionality). CU-CP 102 further includes inter-system interfaces next generation application protocol (NG-AP) 124 and Xn application protocol (Xn-AP) 128. CU-CP 102 hosts various control functions of the air interface Uu 120 and RAN-5GC interface. In some embodiments, RRC 126 data and NG-AP interface 124 data of UEs will be processed at CU-CP 102. CU-CP 102 may also process inter-CU/CU-CP data from the Xn-AP interface 128. Functionality related to access/mobility management and performance optimization, including RRM 122 functionality, may be implemented in a central manner in CU-CP 102, which can include a global view of the network.

According to the embodiment shown, CU-UP 104 includes PDCP 130 and General Packet Radio Service Tunneling Protocol (GTP-U) end point 132. CU-UP 104 terminates GTP-U end point 132 toward 5GC 108 and hosts the PDCP 130 of Uu interface 120.

According to the embodiment of FIG. 1, DU 106 includes PHY 138, RLC 134, and MAC 136. DU 106 hosts part of the UP of the air interface protocol stack from RLC down to PHY.

According to the embodiment, 5GC 108 acts as the mobility anchor and gateway for Internet access.

E1 110 conveys messages between CU-CP 102 and CU-UP 104 to configure the encapsulation/decapsulation of GTP-U packets and PDCP 130.
In the embodiment, messages conveyed over E1 110 can include the following:

| Message name | Direction | Main fields included |
|---|---|---|
| Radio bearer configure | CU-CP 102 → CU-UP 104 | UE Identity, Signaling Radio Bearer (SRB)/ Data Radio Bearer (DRB) ID, DRB configure (PDCP configure), Transport layer/network address of DU |
| UE context setup | CU-CP 102 → CU-UP 104 | UE identity, Access Stratum (AS) Security info, DRB configure |
| UE context modify | CU-CP 102 → CU-UP 104 | UE identity, AS security info, DRB configure |
| UE context release | CU-CP 102 → CU-UP 104 | UE Identity |
| UL RRC Msg. trans. | CU-UP 104 → CU-CP 102 | UE Identity, Radio Resource Control Protocol Data Unit (RRC-PDU) |
| DL RRC Msg. trans. | CU-CP 102 → CU-UP 104 | UE Identity, RRC-PDU |
| GTP-U end point configure | CU-CP 102 → CU-UP 104 | UE Identity, Tunnel Endpoint ID (TEID), DRB ID, transport/network layer address of 5GC |

According to the embodiment, F1-C 112 conveys messages between CU-CP 102 and DU 106 to configure PHY 138, MAC 136 and RLC 134 of Uu interface 120.

In the embodiment, messages conveyed over F1-C 112 can include the following:

| Message Name | Direction | Main fields included |
|---|---|---|
| Cell configure | CU-CP 102 → DU 106 | Radio frame structure (including scheduling of System Information Block (SIB)), antenna installation, System Information intended for UE including Master Information Block (MIB), System Information Block (SIB) type x: x=1,2,3,... similar to those defined in TS36.331 |
| Paging configure | CU-CP 102 → DU 106 | Paging message from MME to UE, including UE Paging Identity chosen from System Architecture Evolution (SAE) Temporary Moblie Subscriber Identity (S-TMSI) or International Mobile Subscriber Identity (IMSI) |
| Radio bearer configure | CU-CP 102 → DU 106 | UE Identity, SRB/DRB ID, SRB/DRB configure, MAC and PHY configure, MAC Control Element (CE) (which can be used for Msg. 4), Transport layer address of CU-UP |
| UE context setup | CU-CP 102 → DU 106 | UE identity, UE Aggregate Maximum Bit-Rate (AMBR) |
| UE context modify | CU-CP 102 → DU 106 | UE identity, UE AMBR |
| UE context release | CU-CP 102 → DU 106 | UE identity |

F1-U 114 may transfer PDCP protocol data units (PDU) between DU 106 and CU-UP 104. F1-U 114 may be based on internet protocol over Ethernent (IP/Eth), where 802.1Q VLAN or 802.1ad stacked VLANs are used to carry information regarding the identity of SRB/DRB, to support Evolved Packet System (EPS) session management or bearer differentiation. IP/Eth can reduce redundancy brought by the GTP-U header. In some embodiments, F1-U 114 may reuse GTP-U, where TEID carries information regarding the identity of SRB/DRB.

NG-C 116 can convey NG-AP messages between CU-CP 102 and 5GC 108. NG-U 118 may transfer GTP-U between 5GC 108 and CU-UP 104.

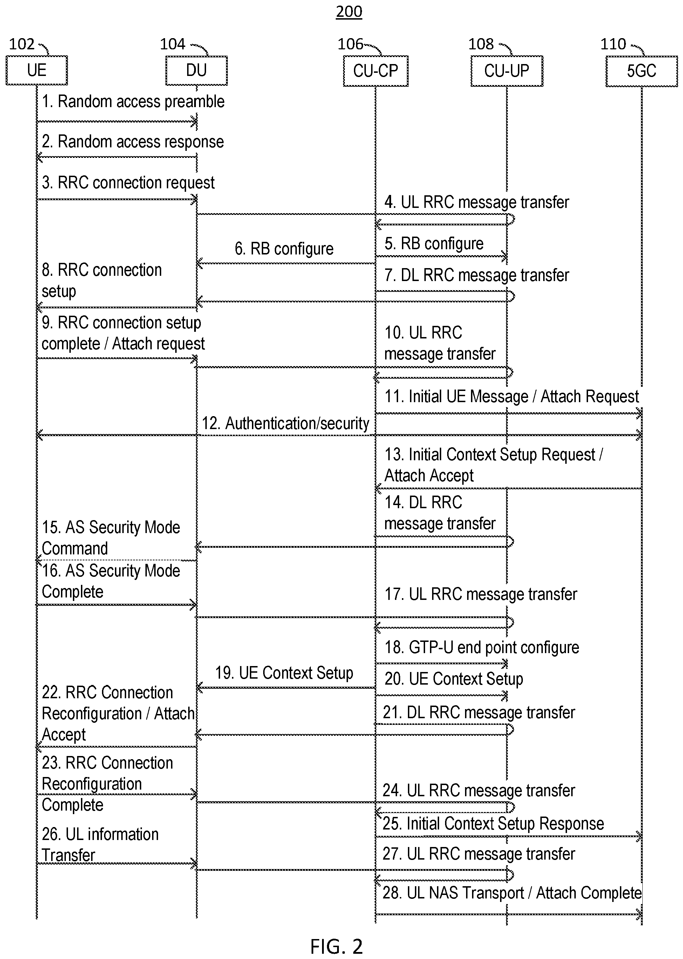

FIG. 2 is a communication diagram 200 illustrating RRC connection establishment initial security activation and RRC connection reconfiguration during an initial attach according to one embodiment. Messages are transferred among UE 102, DU 104, CU-CP 106, CU-UP 108 and 5GC 110 which may be connected by various interfaces in the manner described in relation to FIG. 1. Due to the nature of the RAN re-architecture in some embodiments, RRC messages from DU 104 meant for CU-CP 106 are first sent to, processed, and forwarded by CU-UP 108. Similarly, RRC messages from CU-CP 106 meant for DU 104 are first sent to, processed, and forwarded by CU-UP 108. The direction of travel of the RRC message along this route changes according to which of DU 104 and CU-CP 106 is acting as the sender and which is acting as ultimate receiver of the RRC message. At least some of these messages may correspond to message types discussed in relations to FIG. 1 interfaces E1 and F1-C.

In the embodiment of FIG. 2, a random access preamble message travels from UE 102 to DU 104. In response, a random access response message travels from DU 104 to UE 102. An RRC connection request then travels from UE 102 to DU 104. This RRC connection request then travels from DU 104, through CU-UP 108, and to CU-CP 106. These actions are represented in FIG. 2 as messages 3 and 4. An RB configure message then travels from CU-CP 106 to CU-UP 108. An RB configure message also travels from CU-CP 106 to DU 104. An RRC connection setup message is then passed from CU-CP 106 through CU-UP 108 and to DU 104. This message is then passed from DU 104 to UE 102. These actions are represented in FIG. 2 as messages 7 and 8. An RRC connection setup complete/Attach request message is then passed from UE 102 to DU 104. This message is passed from DU 104 through CU-UP 108 and to CU-CP 106. These actions are represented in FIG. 2 as messages 9 and 10. In response, an Initial UE Message/Attach Request is then passes from CU-CP 106 to 5GC 110.

Authentication/security messages are then passed between UE 102 and 5GC 110.

Once the authentication/security is in place based on those messages, an Initial Context Setup Request / Attach Accept message passes from 5GC 110 to CU-CP 106. In response, an AS Security Mode Command message is then passed from CU-CP 106 through CU-UP 108 to DU 104. This AS Security Mode Command message is then passed from DU 104 to UE 102. These actions are represented in FIG. 2 as messages 14 and 15. In response, an AS Security Mode Complete message is passed from UE 102 to DU 104. This message is then passed from DU 104 through CU-UP 108 and to CU-CP 106. These actions are represented in FIG. 2 as messages 16 and 17. A GTP-U end point configure message is then sent from CU-CP 106 to CU-UP 108. A UE Context Setup message is sent from CU-CP 106 to DU 104. Then a UE Context Setup message is also sent from CU-CP 104 to CU-UP 108. Then an RRC connection Reconfiguration / Attach Accept message is sent from CU-CP 106 through CU-UP 108 and to DU 104. This message then passes from DU 104 to UE 102. These actions are represented in FIG. 2 as messages 21 and 22. In response, an RRC Connection Reconfiguration Complete message then passes from UE 102 to DU 104. This message then passes from DU 104 through CU-UP 108 to CU-CP 106. These actions are represented in FIG. 2 as messages 23 and 24. An Initial Context Setup Response message is then sent from CU-CP 106 to 5GC 110. UE 102 may now generate an UL information Transfer message as in 26 of FIG. 2. This message passes from UE 102 to DU 104. It is then passed from DU 104 through CU-UP 108 and to CU-CP 106. In response, CU-CP 106 then sends a UL NAS Transport / Attach Complete message to 5GC 110. Attachment of the UE to the RAN is completed.

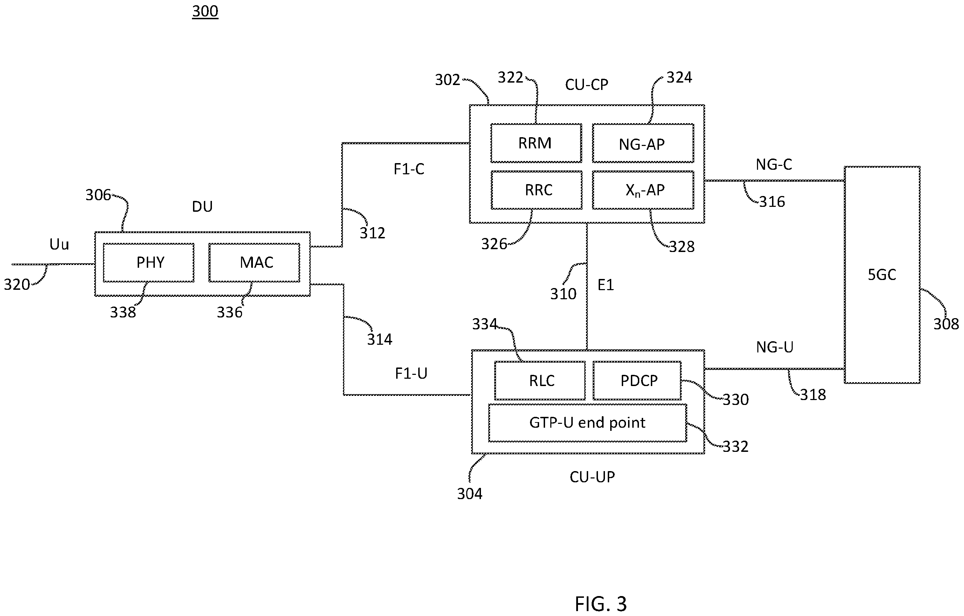

FIG. 3 is a diagram illustrating an embodiment of a RAN architecture 300 with C/U split for air interface and backhaul. RAN architecture 300 comprises CU-CP 302, CU-UP 304, DU 306, and 5GC 308. RAN architecture 300 further includes the following: an E1 interface 310, which connects CU-CP 302 and CU-UP 304; F1-C interface 312, which connects DU 306 and CU-CP 302; F1-U interface 314, which connects DU 306 and CU-UP 304; an NG-C interface 316, which connects CU-CP 302 and 5GC 308; an NG-U interface 318, which connects CU-UP 304 and 5GC 308; and a Uu interface 320, which is the air interface used by one or more UE (not shown) to connect to RAN architecture 300. Collectively, DU 306, CU-UP 304 and CU-CP 302 form a gNB.

According to the embodiment, CU-CP 302 includes layers RRM 322 and RRC 326. CU-CP 302 further includes inter-system interfaces NG-AP 324 and Xn-AP 328. CU-CP 302 hosts various control functions of the air interface Uu 320 and RAN-5GC interface. In some embodiments, RRC 326 data and NG-AP interface 324 data of all UEs will be processed at CU-CP 302. CU-CP 302 may also process inter-CU/CU-CP data from the Xn-AP interface 328. Functionality related to access/mobility management and performance optimization, including RRM 322 functionality, is implemented in a central manner in CU-CP 302, which has a global view of the network.

According to the embodiment, CU-UP 304 includes PDCP 330 and GTP-U end point 332. CU-UP 304 terminates GTP-U end point 332 toward 5GC 308 and hosts the PDCP 330 of Uu interface 320. According to the embodiment, CU-UP 304 also includes RLC 334.

According to the embodiment shown in FIG. 3, DU 306 includes PHY 338 and MAC 336. Unlike the embodiment of FIG. 1, RLC is located in CU-UP 304 rather than in DU 306.

According to the embodiment, 5GC 308 acts as the mobility anchor and gateway for Internet access.

In the embodiment of FIG. 3, messages conveyed using E1 310 can include the following:

| Message Name | Direction | Main fields included |
|---|---|---|
| Radio bearer configure | CU-CP 302 → CU-UP 304 | UE Identity, SRB or DRB ID, SRB Configure (RLC configure), DRB configure (RLC, PDCP configure), Transport layer address of DU |
| UE context setup | CU-CP 302 → CU-UP 304 | UE Identity, AS Security info, UE AMBR, DRB configure |
| UE context modify | CU-CP 302 → CU-UP 304 | UE Identity, AS Security info, UE AMBR, DRB configure |
| UE context release | CU-CP 302 → CU-UP 304 | UE Identity |
| UL RRC Msg. trans. | CU-UP 304 → CU-CP 302 | UE Identity, RRC-PDU |
| DL RRC Msg. trans. | CU-CP 302 → CU-UP 304 | UE Identity, RRC-PDU |
| GTP-U end point configure | CU-CP 302 → CU-UP 304 | UE Identity, TEID, DRB ID, transport/network layer address of 5GC |

In the embodiment of FIG. 3, messages conveyed using F1-C 312 can include the following:

| Message Name | Direction | Main fields included |
|---|---|---|
| Cell configure | CU-CP 302 → DU 306 | Radio frame structure (including scheduling of SIB), antenna installation, System Information intended for UE including Master Information Block (MIB), System Information Block (SIB) type x: x=1,2,3,... similar to those defined in TS36.331 |
| Paging Configure | CU-CP 302 → DU 306 | Paging message from MME to UE, including UE Paging Identity chosen from S-TMSI or IMSI |
| Radio bearer configure | CU-CP 302 → DU 306 | UE Identity, signaling radio bearer (SRB) or data radio bearer (DRB) ID, MAC and PHY configure, MAC CE i.e. UE Contention Resolution Identity used for Msg. 4, Transport layer address of CU-UP |
| UE context setup | CU-CP 302 → DU 306 | UE identity, UE AMBR |
| UE context modify | CU-CP 302 → DU 306 | UE identity, UE AMBR |
| UE context release | CU-CP 302 → DU 306 | UE Identity |

According to the embodiment, F1-U 314 may transfer RLCprotocol data units (PDU) between DU 306 and CU-UP 304. F1-U 314 may be based on IP/Eth, where 802.1Q VLAN or 802.1ad stacked VLANs are used to carry information regarding the identity of SRB/DRB, to support EPS session management or bearer differentiation. IP/Eth could reduce the redundancy brought by GTP-U header. In some embodiments, F1-U 314 may reuse GTP-U, where TEID carries information regarding the identity of SRB/DRB.

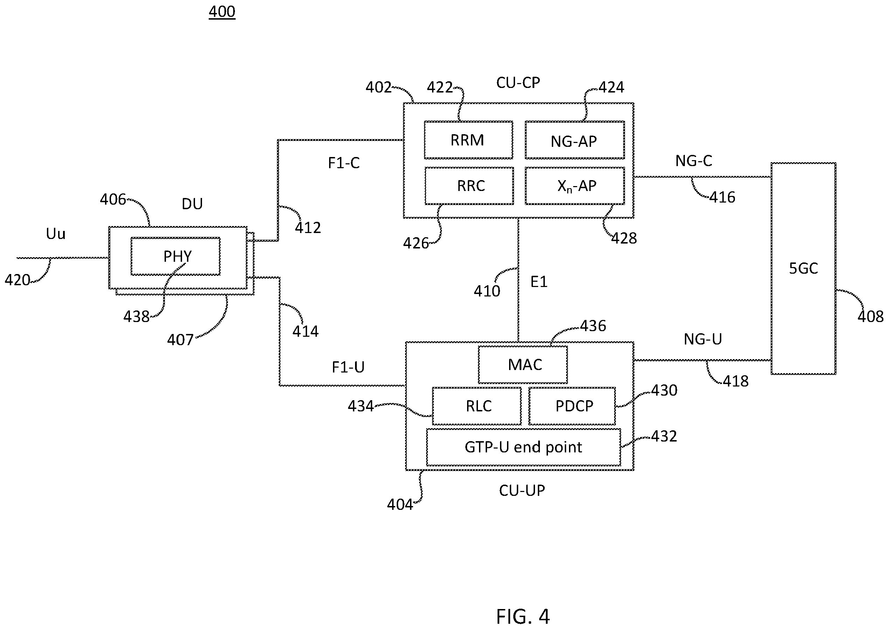

FIG. 4 is a diagram illustrating an embodiment of a RAN architecture 400 with C/U split for air interface and backhaul. RAN architecture 400 comprises CU-CP 402, CU-UP 404, DU 406, and 5GC 408. In some embodiments, CU-CP and CU-UP can serve additional DUs 407.

RAN architecture 400 further includes the following: an E1 interface 410, which connects CU-CP 402 and CU-UP 404; F1-C interface 412, which connects DU 406 and CU-CP 402; F1-U interface 414, which connects DU 406 and CU-UP 404; an NG-C interface 416, which connects CU-CP 402 and 5GC 408; an NG-U interface 418, which connects CU-UP 404 and 5GC 408; and a Uu interface 420, which is the air interface used by one or more UE (not shown) to connect to RAN architecture 400. Collectively, DU 406, CU-UP 404 and CU-CP 402 form a gNB.

According to the embodiment, CU-CP 402 includes layers RRM 422 and RRC 426. CU-CP 402 further includes inter-system interfaces NG-AP 424 and Xn-AP 428. CU-CP 402 hosts various control functions of the air interface Uu 420 and RAN-5GC interface. In some embodiments, RRC 426 data and NG-AP interface 424 data of all UEs will be processed at CU-CP 402. CU-CP 402 may also process inter-CU/CU-CP data from the Xn-AP interface 428. Functionality related to access/mobility management and performance optimization, including RRM 422 functionality, is implemented in a central manner in CU-CP 402, which has a global view of the network.

According to the embodiment, CU-UP 404 includes PDCP 430 and GTP-U end point 432. CU-UP 404 terminates GTP-U end point 432 toward 5GC 408 and hosts the PDCP 430 of Uu interface 420. CU-UP 404 also includes RLC 434 and MAC 436.

According to the embodiment, DU 406 includes PHY 438. Unlike the embodiment of FIG. 1, RLC 434 and MAC 436 are located in CU-UP 404 rather than in DU 406. 5GC 408 acts as the mobility anchor and gateway for Internet access.

In the embodiment of FIG. 4, messages conveyed using E1 410 can include the following:

| Message name | Direction | Main fields included |
|---|---|---|
| Cell configure | CU-CP 402 → CU-UP 404 | Radio frame structure (including scheduling of SIB), antenna installation, System Information intended for UE including Master Information Block (MIB), System Information Block (SIB) type x: x=1,2,3,... similar to those defined in TS36.331, etc. |
| Paging configure | CU-CP 402 → CU-UP 404 | Paging message from MME to UE, including UE Paging Identity chosen from S-TMSI or IMSI |
| Radio bearer configure | CU-CP 402 → CU-UP 404 | UE Identity, SRB or DRB ID, SRB Configure (RLC configure), DRB configure (RLC, PDCP configure), MAC CE i.e. UE Contention Resolution Identity used for Msg. 4, Transport layer address of RU |
| UE context setup | CU-CP 402 → CU-UP 404 | UE identity, AS Security info, UE AMBR, DRB configure |
| UE context modify | CU-CP 402 → CU-UP 404 | UE identity, AS Security info, UE AMBR, DRB configure |
| UE context release | CU-CP 402 → CU-UP 404 | UE Identity |
| UL RRC Msg. trans | CU-UP 404 → CU-CP 402 | UE Identity, RRC-PDU |
| DL RRC Msg. trans. | CU-CP 402 → CU-UP 404 | UE Identity, RRC-PDU |
| GTP-U end point configure | CU-CP 402 → CU-UP 404 | UE Identity, TEID, DRB ID, transport/network layer address of 5GC |

In the embodiment of FIG. 4, messages conveyed using F1-C 412 can include the following:

| Message name | Direction | Main fields included |
|---|---|---|
| PHY configure | CU-CP 402 → DU 406 | Common PHY configure, Per UE dedicated PHY configure (UE Identity, RS power, etc.) |

In the embodiment of FIG. 4, messages conveyed using F 1-U 414 can include the following:

| Message name | Direction | Main fields included |
|---|---|---|
| Subframe to be transmitted | CU-UP 404 → DU 406 | Control format indicator (CFI), PUSCH grant, Transmission power control (TPC), PDSCH assignment & transport block |
| Subframe received | DU 406 → CU-UP 404 | PUSCH transport block, CSI report (including IOT, DL CQI/PMI/RI, UL SRS measurement), ACK/NACK report, PRACH report (including detected preamble index & position) |

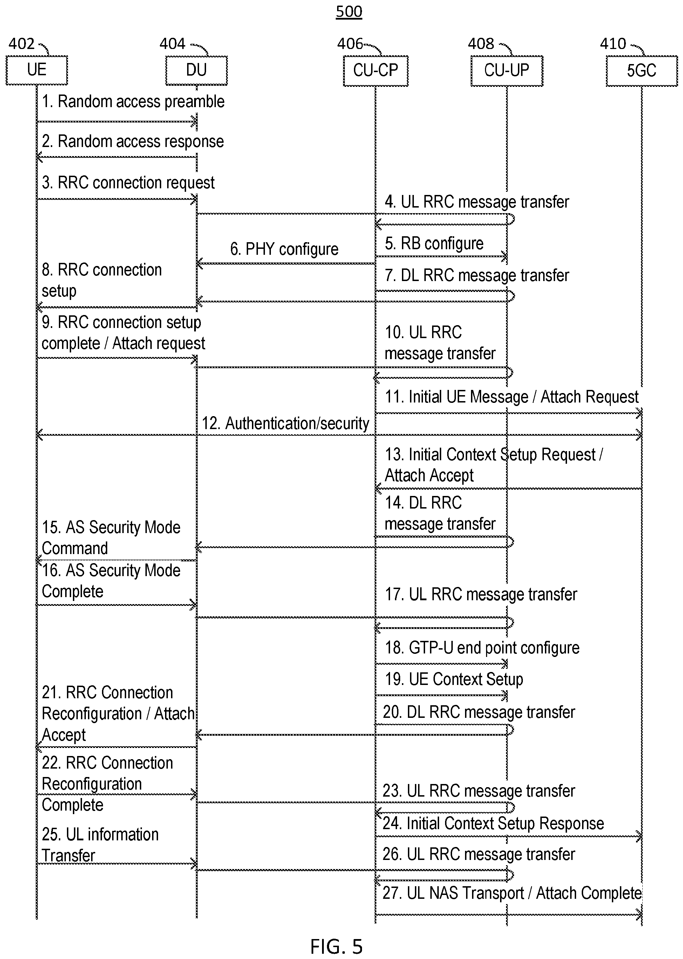

FIG. 5 is a communication diagram 500 illustrating RRC connection establishment initial security activation and RRC connection reconfiguration during an initial attach according to one embodiment. Messages are transferred among UE 402, DU 404, CU-CP 406, CU-UP 408 and 5GC 410 which may be connected by various interfaces in the manner described in relation to FIG. 4. Due to the nature of the RAN re-architecture in some embodiments, RRC messages from DU 404 meant for CU-CP 406 are first sent to, processed, and forwarded by CU-UP 408. Similarly, RRC messages from CU-CP 406 meant for DU 404 are first sent to, processed, and forwarded by CU-UP 108. The direction of travel of the RRC message along this route changes according to which of DU 404 and CU-CP 406 is acting as the sender and which is acting as ultimate receiver of the RRC message.

In the embodiment of FIG. 5, a random access preamble message travels from UE 402 to DU 404. In response, a random access response message travels from DU 404 to UE 402.

An RRC connection request then travels from UE 402 to DU 404. This RRC connection request then travels from DU 404, through CU-UP 408, and to CU-CP 406. These actions are represented in FIG. 5 as messages 3 and 4. An RB configure message then travels from CU-CP 406 to CU-UP 408. An PHY configure message then travels from CU-CP 406 to DU 404. An RRC connection setup message is then passed from CU-CP 406 through CU-UP 408 and to DU 404. This message is then passed from DU 404 to UE 402. These actions are represented in FIG. 5 as messages 7 and 8. An RRC connection setup complete/attach request message is then passed from UE 402 to DU 404. This message is passed from DU 404 through CU-UP 408 and to CU-CP 406. These actions are represented in FIG. 5 as messages 9 and 10. In response, an Initial UE Message/Attach Request is then passes from CU-CP 406 to 5GC 410.

Authentication/security messages are then passed between UE 402 and 5GC 410.

Once the authentication/security is in place based on those messages, an Initial Context Setup Request / Attach Accept message passes from 5GC 410 to CU-CP 406. In response, an AS Security Mode Command message is then passed from CU-CP 406 through CU-UP 408 to DU 404. This AS Security Mode Command message is then passed from DU 404 to UE 402. These actions are represented in FIG. 5 as messages 14 and 15. In response, an AS Security Mode Complete message is passed from UE 402 to DU 404. This message is then passed from DU 404 through CU-UP 408 and to CU-CP 406. These actions are represented in FIG. 5 as messages 16 and 17. A GTP-U end point configure message is then sent from CU-CP 406 to CU-UP 408. A UE Context Setup message is then sent from CU-CP 406 to CU-UP 408. An RRC connection Reconfiguration / Attach Accept message is then sent from CU-CP 406 through CU-UP 408 and to DU 404. This message then passes from DU 404 to UE 402. These actions are represented in FIG. 5 as messages 20 and 21. An RRC Connection Reconfiguration Complete message then passes from UE 402 to DU 404. This message passes from DU 404 through CU-UP 408 to CU-CP 406. These actions are represented in FIG. 5 as messages 22 and 23. An Initial Context Setup Response message is then sent from CU-CP 406 to 5GC 410.

UE 402 generates an UL information Transfer message as shown in message 25 of FIG. 5. This message passes from UE 402 to DU 404. It is then passed from DU 404 through CU-UP 408 and to CU-CP 406. In response, CU-CP 406 then sends a UL NAS Transport / Attach Complete message to 5GC 410.

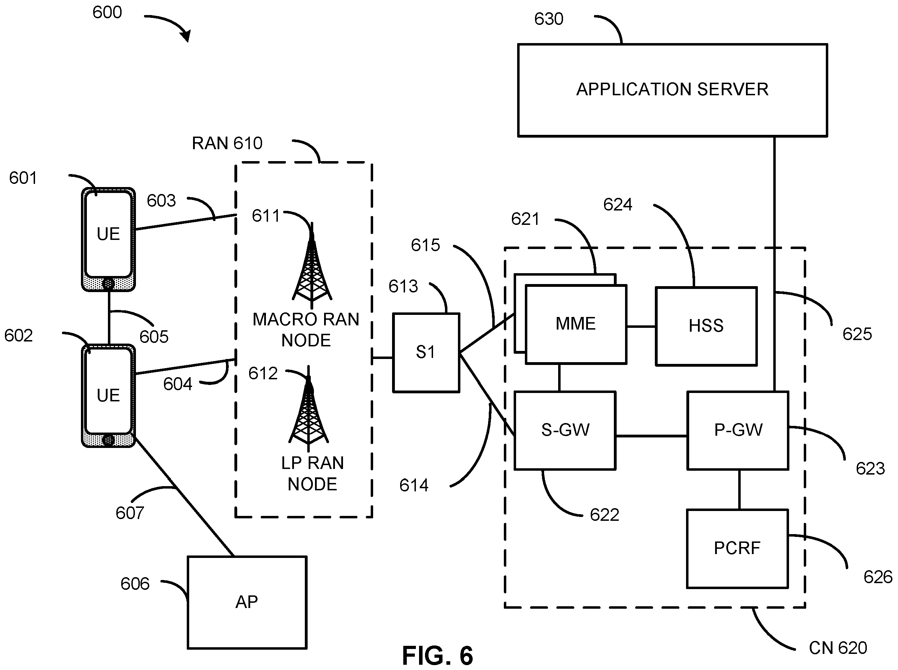

FIG. 6 illustrates an architecture of a system 600 of a network in accordance with some embodiments. The system 600 is shown to include a user equipment (UE) 601 and a UE 602. The UEs 601 and 602 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 601 and 602 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 601 and 602 may be configured to connect, e.g., communicatively couple, with a radio access network (RAN) 610. The RAN 610 may be, for example, an Evolved Universal Mobile Telecommunications System (UMTS) Terrestrial Radio Access Network (E-UTRAN), a NextGen RAN (NG RAN), or some other type of RAN. The UEs 601 and 602 utilize connections 603 and 604, respectively, each of which comprises a physical communications interface or layer (discussed in further detail below); in this example, the connections 603 and 604 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 601 and 602 may further directly exchange communication data via a ProSe interface 605. The ProSe interface 605 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 602 is shown to be configured to access an access point (AP) 606 via connection 607. The connection 607 can comprise a local wireless connection, such as a connection consistent with any IEEE 802.11 protocol, wherein the AP 606 would comprise a wireless fidelity (WiFi^{®}) router. In this example, the AP 606 is shown to be connected to the Internet without connecting to the core network of the wireless system (described in further detail below).

The RAN 610 can include one or more access nodes that enable the connections 603 and 604. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 610 may include one or more RAN nodes for providing macrocells, e.g., macro RAN node 611, and one or more RAN nodes for providing femtocells or picocells (e.g., cells having smaller coverage areas, smaller user capacity, or higher bandwidth compared to macrocells), e.g., low power (LP) RAN node 612.

Any of the RAN nodes 611 and 612 can terminate the air interface protocol and can be the first point of contact for the UEs 601 and 602. In some embodiments, any of the RAN nodes 611 and 612 can fulfill various logical functions for the RAN 610 including, but not limited to, radio network controller (RNC) functions such as radio bearer management, uplink and downlink dynamic radio resource management and data packet scheduling, and mobility management.

In accordance with some embodiments, the UEs 601 and 602 can be configured to communicate using Orthogonal Frequency-Division Multiplexing (OFDM) communication signals with each other or with any of the RAN nodes 611 and 612 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 611 and 612 to the UEs 601 and 602, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 601 and 602. The physical downlink control channel (PDCCH) may carry information about the transport format and resource allocations related to the PDSCH channel, among other things. It may also inform the UEs 601 and 602 about the transport format, resource allocation, and H-ARQ (Hybrid Automatic Repeat Request) information related to the uplink shared channel. Typically, downlink scheduling (assigning control and shared channel resource blocks to the UE 602 within a cell) may be performed at any of the RAN nodes 611 and 612 based on channel quality information fed back from any of the UEs 601 and 602. The downlink resource assignment information may be sent on the PDCCH used for (e.g., assigned to) each of the UEs 601 and 602.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as enhanced resource element groups (EREGs). An ECCE may have other numbers of EREGs in some situations.

The RAN 610 is shown to be communicatively coupled to a core network (CN) 620 -via an S1 interface 613. In embodiments, the CN 620 may be an evolved packet core (EPC) network, a 5G Core (5GC), a NextGen Packet Core (NPC) network, or some other type of CN. In this embodiment the S1 interface 613 is split into two parts: the S1-U interface 614, which carries traffic data between the RAN nodes 611 and 612 and a serving gateway (S-GW) 622, and an S1-mobility management entity (MME) interface 615, which is a signaling interface between the RAN nodes 611 and 612 and MMEs 621.

In this embodiment, the CN 620 comprises the MMEs 621, the S-GW 622, a Packet Data Network (PDN) Gateway (P-GW) 623, and a home subscriber server (HSS) 624. The MMEs 621 may be similar in function to the control plane of legacy Serving General Packet Radio Service (GPRS) Support Nodes (SGSN). The MMEs 621 may manage mobility aspects in access such as gateway selection and tracking area list management. The HSS 624 may comprise a database for network users, including subscription-related information to support the network entities' handling of communication sessions. The CN 620 may comprise one or several HSSs 624, depending on the number of mobile subscribers, on the capacity of the equipment, on the organization of the network, etc. For example, the HSS 624 can provide support for routing/roaming, authentication, authorization, naming/addressing resolution, location dependencies, etc.

The S-GW 622 may terminate the S1 interface 613 towards the RAN 610, and routes data packets between the RAN 610 and the CN 620. In addition, the S-GW 622 may be a local mobility anchor point for inter-RAN node handovers and also may provide an anchor for inter-3GPP mobility. Other responsibilities may include lawful intercept, charging, and some policy enforcement.

The P-GW 623 may terminate an SGi interface toward a PDN. The P-GW 623 may route data packets between the CN 620 (e.g., an EPC network) and external networks such as a network including the application server 630 (alternatively referred to as application function (AF)) via an Internet Protocol (IP) interface 625. Generally, an application server 630 may be an element offering applications that use IP bearer resources with the core network (e.g., UMTS Packet Services (PS) domain, LTE PS data services, etc.). In this embodiment, the P-GW 623 is shown to be communicatively coupled to an application server 630 via an IP communications interface 625. The application server 630 can also be configured to support one or more communication services (e.g., Voice-over-Internet Protocol (VoIP) sessions, PTT sessions, group communication sessions, social networking services, etc.) for the UEs 601 and 602 via the CN 620.

The P-GW 623 may further be a node for policy enforcement and charging data collection. A Policy and Charging Enforcement Function (PCRF) 626 is the policy and charging control element of the CN 620. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 626 may be communicatively coupled to the application server 630 via the P-GW 623. The application server 630 may signal the PCRF 626 to indicate a new service flow and select the appropriate Quality of Service (QoS) and charging parameters. The PCRF 626 may provision this rule into a Policy and Charging Enforcement Function (PCEF) (not shown) with the appropriate traffic flow template (TFT) and QoS class of identifier (QCI), which commences the QoS and charging as specified by the application server 630.

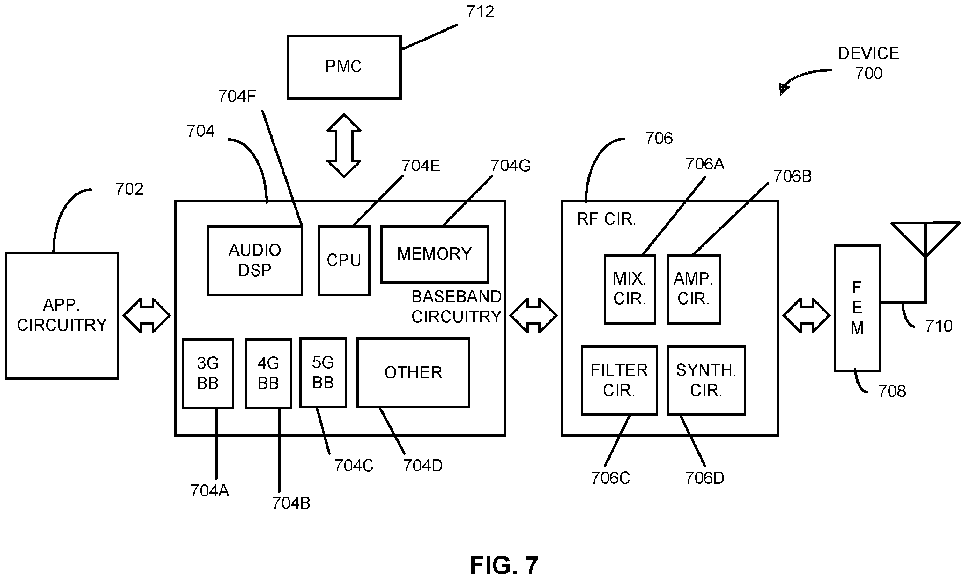

FIG. 7 illustrates example components of a device 700 in accordance with some embodiments. In some embodiments, the device 700 may include application circuitry 702, baseband circuitry 704, Radio Frequency (RF) circuitry 706, front-end module (FEM) circuitry 708, one or more antennas 710, and power management circuitry (PMC) 712 coupled together at least as shown. The components of the illustrated device 700 may be included in a UE or a RAN node. In some embodiments, the device 700 may include fewer elements (e.g., a RAN node may not utilize application circuitry 702, and instead include a processor/controller to process IP data received from an EPC). In some embodiments, the device 700 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 700. In some embodiments, processors of application circuitry 702 may process IP data packets received from an EPC.

The baseband circuitry 704 may include circuitry such as, but not limited to, one or more single-core or multi-core processors. The baseband circuitry 704 may include one or more baseband processors or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a third generation (3G) baseband processor 704A, a fourth generation (4G) baseband processor 704B, a fifth generation (5G) baseband processor 704C, or other baseband processor(s) 704D for other existing generations, generations in development or to be developed in the future (e.g., second generation (2G), sixth generation (6G), etc.). The baseband circuitry 704 (e.g., one or more of baseband processors 704A-D) may handle various radio control functions that enable communication with one or more radio networks via the RF circuitry 706. In other embodiments, some or all of the functionality of baseband processors 704A-D may be included in modules stored in the memory 704G and executed via a Central Processing Unit (CPU) 704E. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, or constellation mapping/demapping functionality. In some embodiments, encoding/decoding circuitry of the baseband circuitry 704 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include one or more audio digital signal processor(s) (DSP) 704F. The audio DSP(s) 704F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) or other wireless metropolitan area networks (WMAN), a wireless local area network (WLAN), or a wireless personal area network (WPAN). Embodiments in which the baseband circuitry 704 is configured to support radio communications of more than one wireless protocol may be referred to as multi-mode baseband circuitry.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. The RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the receive signal path of the RF circuitry 706 may include mixer circuitry 706A, amplifier circuitry 706B and filter circuitry 706C. In some embodiments, the transmit signal path of the RF circuitry 706 may include filter circuitry 706C and mixer circuitry 706A. RF circuitry 706 may also include synthesizer circuitry 706D for synthesizing a frequency for use by the mixer circuitry 706A of the receive signal path and the transmit signal path. In some embodiments, the mixer circuitry 706A of the receive signal path may be configured to down-convert RF signals received from the FEM circuitry 708 based on the synthesized frequency provided by synthesizer circuitry 706D. The amplifier circuitry 706B may be configured to amplify the down-converted signals and the filter circuitry 706C may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, the mixer circuitry 706A of the receive signal path may comprise passive mixers, although the scope of the embodiments is not limited in this respect.

In some embodiments, the mixer circuitry 706A of the transmit signal path may be configured to up-convert input baseband signals based on the synthesized frequency provided by the synthesizer circuitry 706D to generate RF output signals for the FEM circuitry 708. The baseband signals may be provided by the baseband circuitry 704 and may be filtered by the filter circuitry 706C.

In some embodiments, the mixer circuitry 706A of the receive signal path and the mixer circuitry 706A of the transmit signal path may include two or more mixers and may be arranged for quadrature downconversion and upconversion, respectively. In some embodiments, the mixer circuitry 706A of the receive signal path and the mixer circuitry 706A of the transmit signal path may include two or more mixers and may be arranged for image rejection (e.g., Hartley image rejection). In some embodiments, the mixer circuitry 706A of the receive signal path and the mixer circuitry 706A may be arranged for direct downconversion and direct upconversion, respectively. In some embodiments, the mixer circuitry 706A of the receive signal path and the mixer circuitry 706A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706D may be a fractional-N synthesizer or a fractional N/N+1 synthesizer, although the scope of the embodiments is not limited in this respect as other types of frequency synthesizers may be suitable. For example, synthesizer circuitry 706D may be a delta-sigma synthesizer, a frequency multiplier, or a synthesizer comprising a phase-locked loop with a frequency divider.

The synthesizer circuitry 706D may be configured to synthesize an output frequency for use by the mixer circuitry 706A of the RF circuitry 706 based on a frequency input and a divider control input. In some embodiments, the synthesizer circuitry 706D may be a fractional N/N+1 synthesizer.

In some embodiments, frequency input may be provided by a voltage controlled oscillator (VCO), although that is not a requirement. Divider control input may be provided by either the baseband circuitry 704 or the application circuitry 702 (such as an applications processor) depending on the desired output frequency. In some embodiments, a divider control input (e.g., N) may be determined from a look-up table based on a channel indicated by the application circuitry 702.

Synthesizer circuitry 706D of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 706D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. The FEM circuitry 708 may also include a transmit signal path which may include circuitry configured to amplify signals for transmission provided by the RF circuitry 706 for transmission by one or more of the one or more antennas 710. In various embodiments, the amplification through the transmit or receive signal paths may be done solely in the RF circuitry 706, solely in the FEM circuitry 708, or in both the RF circuitry 706 and the FEM circuitry 708.

In some embodiments, the FEM circuitry 708 may include a TX/RX switch to switch between transmit mode and receive mode operation. The FEM circuitry 708 may include a receive signal path and a transmit signal path. The receive signal path of the FEM circuitry 708 may include an LNAto amplify received RF signals and provide the amplified received RF signals as an output (e.g., to the RF circuitry 706). The transmit signal path of the FEM circuitry 708 may include a power amplifier (PA) to amplify input RF signals (e.g., provided by the RF circuitry 706), and one or more filters to generate RF signals for subsequent transmission (e.g., by one or more of the one or more antennas 710).

In some embodiments, the PMC 712 may manage power provided to the baseband circuitry 704. In particular, the PMC 712 may control power-source selection, voltage scaling, battery charging, or DC-to-DC conversion. The PMC 712 may often be included when the device 700 is capable of being powered by a battery, for example, when the device 700 is included in a UE. The PMC 712 may increase the power conversion efficiency while providing desirable implementation size and heat dissipation characteristics.

FIG. 7 shows the PMC 712 coupled only with the baseband circuitry 704. However, in other embodiments, the PMC 712 may be additionally or alternatively coupled with, and perform similar power management operations for, other components such as, but not limited to, the application circuitry 702, the RF circuitry 706, or the FEM circuitry 708.

In some embodiments, the PMC 712 may control, or otherwise be part of, various power saving mechanisms of the device 700. For example, if the device 700 is in an RRC_Connected state, where it is still connected to the RAN node as it expects to receive traffic shortly, then it may enter a state known as Discontinuous Reception Mode (DRX) after a period of inactivity. During this state, the device 700 may power down for brief intervals of time and thus save power.

If there is no data traffic activity for an extended period of time, then the device 700 may transition off to an RRC_Idle state, where it disconnects from the network and does not perform operations such as channel quality feedback, handover, etc. The device 700 goes into a very low power state and it performs paging where again it periodically wakes up to listen to the network and then powers down again. The device 700 may not receive data in this state, and in order to receive data, it transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 702 and processors of the baseband circuitry 704 may be used to execute elements of one or more instances of a protocol stack. For example, processors of the baseband circuitry 704, alone or in combination, may be used to execute Layer 3, Layer 2, or Layer 1 functionality, while processors of the application circuitry 702 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

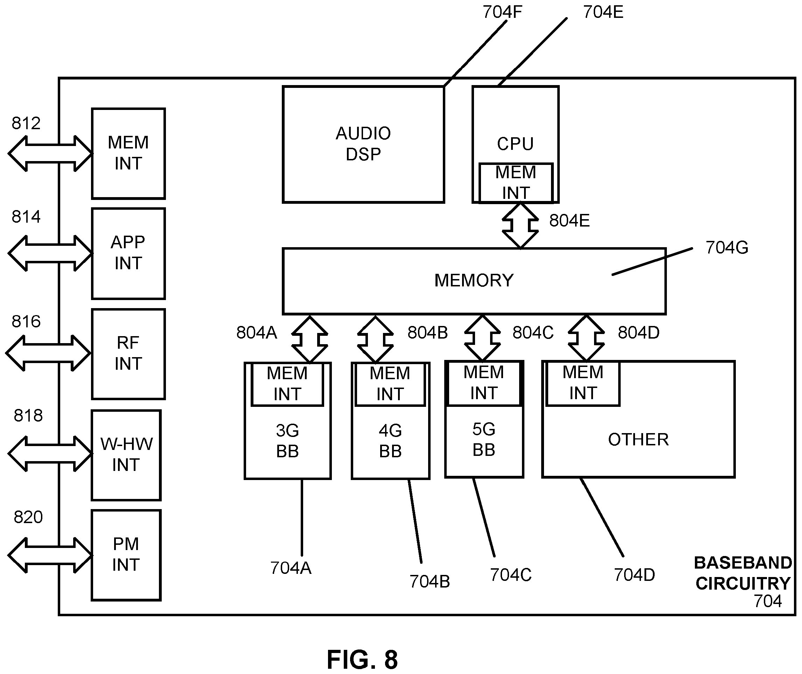

FIG. 8 illustrates example interfaces of baseband circuitry in accordance with some embodiments. As discussed above, the baseband circuitry 704 of FIG. 7 may comprise processors 704A-704E and a memory 704G utilized by said processors. Each of the processors 704A-704E may include a memory interface, 804A-804E, respectively, to send/receive data to/from the memory 704G.

The baseband circuitry 704 may further include one or more interfaces to communicatively couple to other circuitries/devices, such as a memory interface 812 (e.g., an interface to send/receive data to/from memory external to the baseband circuitry 704), an application circuitry interface 814 (e.g., an interface to send/receive data to/from the application circuitry 702 of FIG. 7), an RF circuitry interface 816 (e.g., an interface to send/receive data to/from RF circuitry 706 of FIG. 7), a wireless hardware connectivity interface 818 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 820 (e.g., an interface to send/receive power or control signals to/from the PMC 712.

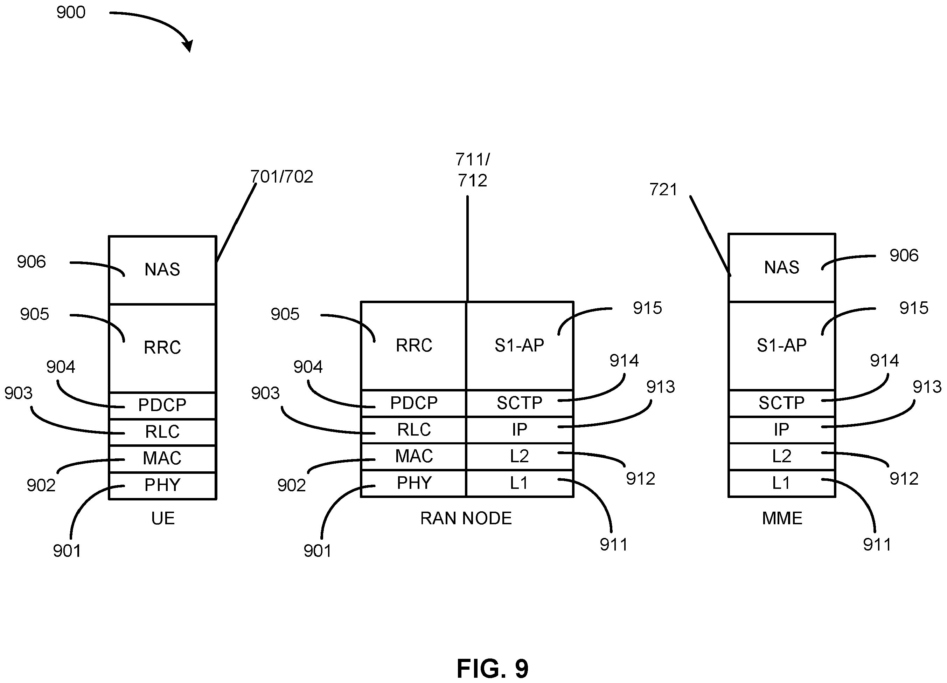

FIG. 9 is an illustration of a control plane protocol stack in accordance with some embodiments. In this embodiment, a control plane 900 is shown as a communications protocol stack between the UE 601 (or alternatively, the UE 602), the RAN node 611 (or alternatively, the RAN node 612), and the MME 621. As described above, these layers can be separated into the DU, CU-CP and the CU-UP.

A PHY layer 901 may transmit or receive information used by the MAC layer 902 over one or more air interfaces. The PHY layer 901 may further perform link adaptation or adaptive modulation and coding (AMC), power control, cell search (e.g., for initial synchronization and handover purposes), and other measurements used by higher layers, such as an RRC layer 905. The PHY layer 901 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 902 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

An RLC layer 903 may operate in a plurality of modes of operation, including: Transparent Mode (TM), Unacknowledged Mode (UM), and Acknowledged Mode (AM). The RLC layer 903 may execute transfer of upper layer protocol data units (PDUs), error correction through automatic repeat request (ARQ) for AM data transfers, and concatenation, segmentation and reassembly of RLC SDUs for UM and AM data transfers. The RLC layer 903 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

A PDCP layer 904 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 905 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point-to-point radio bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 601 and the RAN node 611 may utilize a Uu interface (e.g., an LTE-Uu interface) to exchange control plane data via a protocol stack comprising the PHY layer 901, the MAC layer 902, the RLC layer 903, the PDCP layer 904, and the RRC layer 905.

In the embodiment shown, the non-access stratum (NAS) protocols 906 form the highest stratum of the control plane between the UE 601 and the MME 621. The NAS protocols 906 support the mobility of the UE 601 and the session management procedures to establish and maintain IP connectivity between the UE 601 and the P-GW 623.

The S1 Application Protocol (S1-AP) layer 915 may support the functions of the S1 interface and comprise Elementary Procedures (EPs). An EP is a unit of interaction between the RAN node 611 and the CN 620. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the stream control transmission protocol/internet protocol (SCTP/IP) layer) 914 may ensure reliable delivery of signaling messages between the RAN node 611 and the MME 621 based, in part, on the IP protocol, supported by an IP layer 913. An L2 layer 912 and an L1 layer 911 may refer to communication links (e.g., wired or wireless) used by the RAN node and the MME to exchange information.

The RAN node 611 and the MME 621 may utilize an S1-MME interface to exchange control plane data via a protocol stack comprising the L1 layer 911, the L2 layer 912, the IP layer 913, the SCTP layer 914, and the S1-AP layer 915.

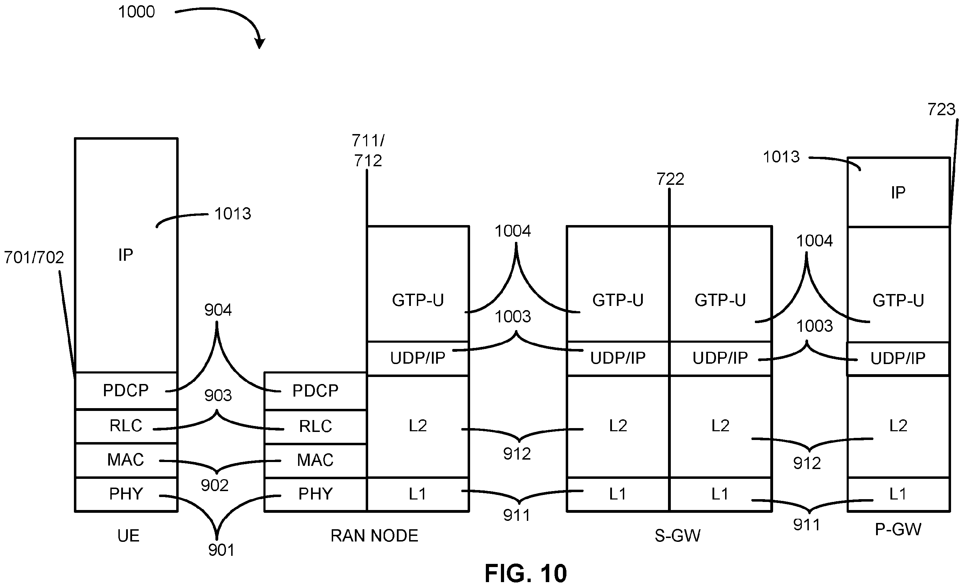

FIG. 10 is an illustration of a user plane protocol stack in accordance with some embodiments. In this embodiment, a user plane 1000 is shown as a communications protocol stack between the UE 601 (or alternatively, the UE 602), the RAN node 611 (or alternatively, the RAN node 612), the S-GW 622, and the P-GW 623. The user plane 1000 may utilize at least some of the same protocol layers as the control plane 900. For example, the UE 601 and the RAN node 611 may utilize a Uu interface (e.g., an LTE-Uu interface) to exchange user plane data via a protocol stack comprising the PHY layer 901, the MAC layer 902, the RLC layer 903, the PDCP layer 904. As described above, a protocol stack can be separated into the DU, CU-CP and CU-UP.

The General Packet Radio Service (GPRS) Tunneling Protocol for the user plane (GTP-U) layer 1004 may be used for carrying user data within the GPRS core network and between the radio access network and the core network. The user data transported can be packets in any of IPv4, IPv6, or PPP formats, for example. The UDP and IP security (UDP/IP) layer 1003 may provide checksums for data integrity, port numbers for addressing different functions at the source and destination, and encryption and authentication on the selected data flows. The RAN node 611 and the S-GW 622 may utilize an S1-U interface to exchange user plane data via a protocol stack comprising the L1 layer 911, the L2 layer 912, the UDP/IP layer 1003, and the GTP-U layer 1004. The S-GW 622 and the P-GW 623 may utilize an S5/S8a interface to exchange user plane data via a protocol stack comprising the L1 layer 911, the L2 layer 912, the UDP/IP layer 1003, and the GTP-U layer 1004. As discussed above with respect to FIG. 9, NAS protocols support the mobility of the UE 601 and the session management procedures to establish and maintain IP connectivity between the UE 601 and the P-GW 623.

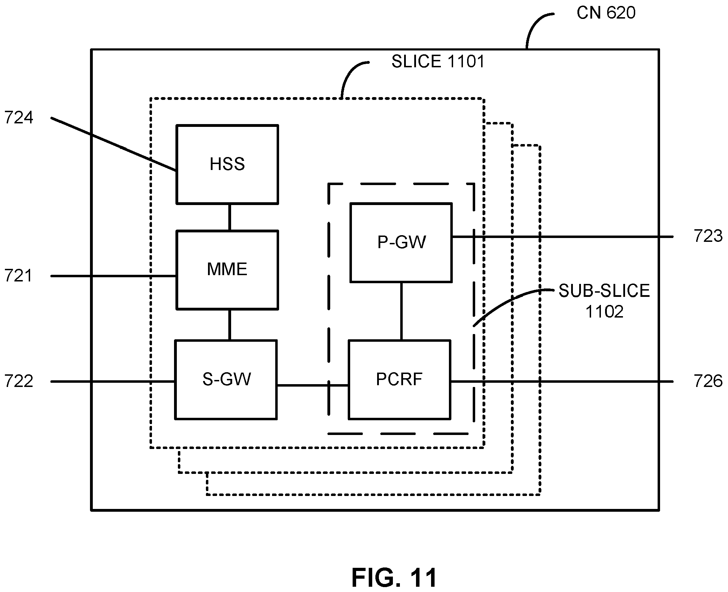

FIG. 11 illustrates components of a core network in accordance with some embodiments. The components of the CN 620 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 620 may be referred to as a network slice 1101. A logical instantiation of a portion of the CN 620 may be referred to as a network sub-slice 1102 (e.g., the network sub-slice 1102 is shown to include the PGW 623 and the PCRF 626).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

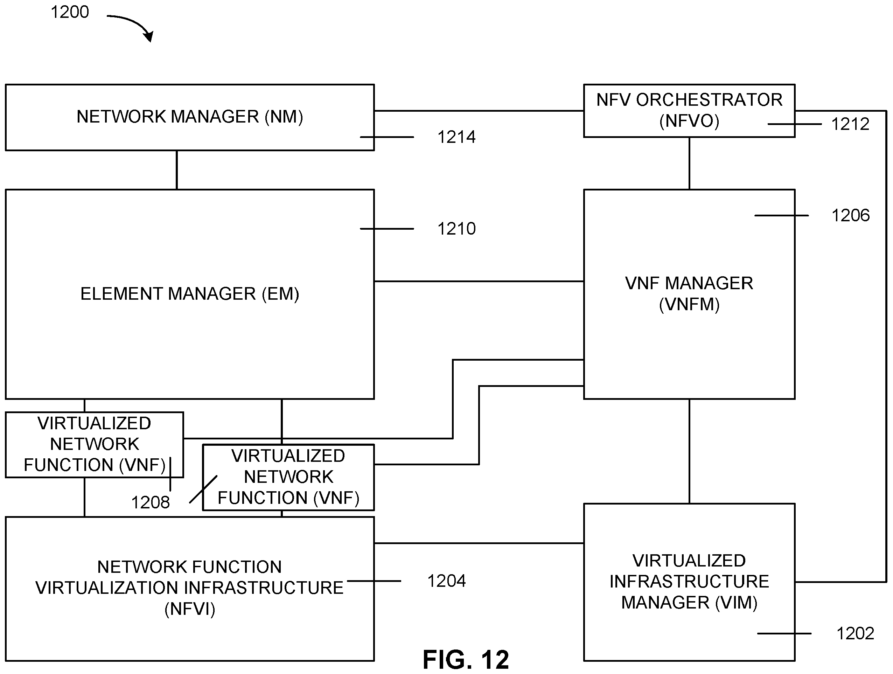

FIG. 12 is a block diagram illustrating components, according to some example embodiments, of a system 1200 to support NFV. The system 1200 is illustrated as including a virtualized infrastructure manager (VIM) 1202, a network function virtualization infrastructure (NFVI) 1204, a VNF manager (VNFM) 1206, virtualized network functions (VNFs) 1208, an element manager (EM) 1210, an NFV Orchestrator (NFVO) 1212, and a network manager (NM) 1214.

The VIM 1202 manages the resources of the NFVI 1204. The NFVI 1204 can include physical or virtual resources and applications (including hypervisors) used to execute the system 1200. The VIM 1202 may manage the life cycle of virtual resources with the NFVI 1204 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 1206 may manage the VNFs 1208. The VNFs 1208 may be used to execute EPC components/functions. The VNFM 1206 may manage the life cycle of the VNFs 1208 and track performance, fault and security of the virtual aspects of VNFs 1208. The EM 1210 may track the performance, fault and security of the functional aspects of VNFs 1208. The tracking data from the VNFM 1206 and the EM 1210 may comprise, for example, performance measurement (PM) data used by the VIM 1202 or the NFVI 1204. Both the VNFM 1206 and the EM 1210 can scale up/down the quantity of VNFs of the system 1200.

The NFVO 1212 may coordinate, authorize, release and engage resources of the NFVI 1204 in order to provide the requested service (e.g., to execute an EPC function, component, or slice). The NM 1214 may provide a package of end-user functions with the responsibility for the management of a network, which may include network elements with VNFs, non-virtualized network functions, or both (management of the VNFs may occur via the EM 1210).

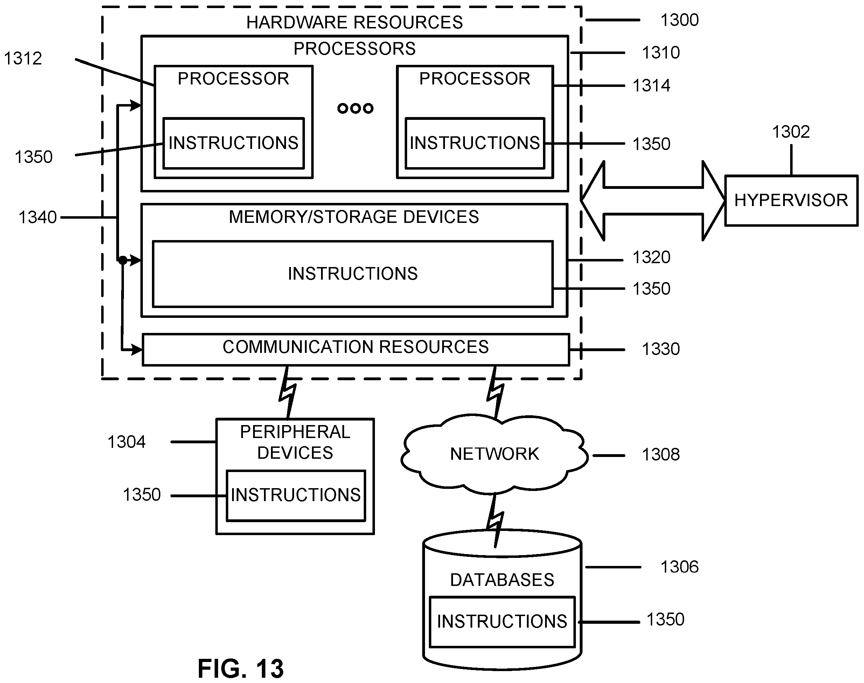

FIG. 13 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 13 shows a diagrammatic representation of hardware resources 1300 including one or more processors (or processor cores) 1310, one or more memory/storage devices 1320, and one or more communication resources 1330, each of which may be communicatively coupled via a bus 1340. For embodiments where node virtualization (e.g., NFV) is utilized, a hypervisor 1302 may be executed to provide an execution environment for one or more network slices/sub-slices to utilize the hardware resources 1300.

The processors 1310 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1312 and a processor 1314.

The memory/storage devices 1320 may include main memory, disk storage, or any suitable combination thereof. The memory/storage devices 1320 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1330 may include interconnection or network interface components or other suitable devices to communicate with one or more peripheral devices 1304 or one or more databases 1306 via a network 1308. For example, the communication resources 1330 may include wired communication components (e.g., for coupling via a Universal Serial Bus (USB)), cellular communication components, NFC components, Bluetooth^{®} components (e.g., Bluetooth^{®} Low Energy), Wi-Fi^{®} components, and other communication components.

Instructions 1350 may comprise software, a program, an application, an applet, an app, or other executable code for causing at least any of the processors 1310 to perform any one or more of the methodologies discussed herein. The instructions 1350 may reside, completely or partially, within at least one of the processors 1310 (e.g., within the processor's cache memory), the memory/storage devices 1320, or any suitable combination thereof. Furthermore, any portion of the instructions 1350 may be transferred to the hardware resources 1300 from any combination of the peripheral devices 1304 or the databases 1306. Accordingly, the memory of processors 1310, the memory/storage devices 1320, the peripheral devices 1304, and the databases 1306 are examples of computer-readable and machine-readable media.

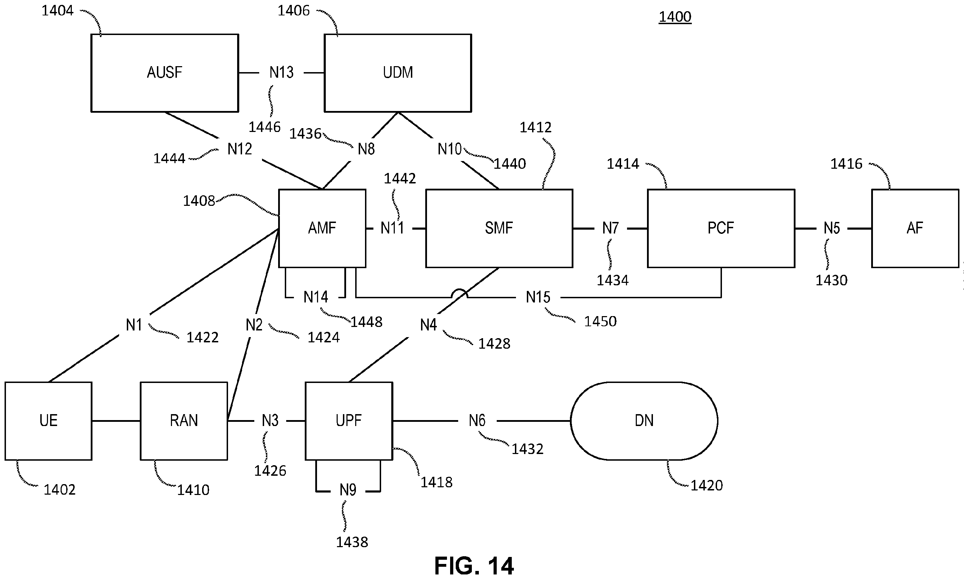

FIG. 14 illustrates an architecture of a system 1400 of a cellular network in accordance with some embodiments. In some embodiments, the system 1400 comprises a UE 1402, Authentication Server Function (AUSF) 1404, Unified Data Management (UDM) 1406, Core Access and Mobility Management Function (AMF) 1408, RAN 1410, Session Management Function (SMF) 1412, Policy Control Function (PCF) 1414, Application Function (AF) 1416, User Plane Function (UPF) 1418, and Data Network (DN) (e.g., operator services, Internet access or 3rd party services).

A reference point representation can show the interaction between the network function services in the network functions described by point-to-point reference points (e.g., N11) between any two network functions (e.g., AMF and SMF). The system 1400 can further include the following reference point representations: an N1 reference point 1422, which connects UE 1402 and AMF 1408; an N2 reference point 1424, which connects RAN 1410 and AMF 1408; an N3 reference point 1426, which connects RAN 1410 and UPF 1418; an N4 reference point 1428, which connects UPF 1418 and SMF 1412; an N5 reference point 1430, which connects PCF 1414 and AF 1416; an N6 reference point 1432, which connects UPF 1418 and DN 1420; an N7 reference point 1434, which connects SMF 1412 and PCF 1414; an N8 reference point 1436, which connects AMF 1408 and UDM 1406; an N9 reference point 1438, which connects two core UPFs 1418; an N10 reference point 1440, which connects SMF 1412 and UDM 1406; an N11 reference point 1442, which connects AMF 1408 and SMF 1412; an N12 reference point 1444, which connects AMF 1408 and AUSF 1404; an N13 reference point 1446, which connects AUSF 1404 and UDM 1406; an N14 reference point 1448, which connects two AMFs 1408; and an N15 reference point 1450, which connects AMF 1408 and PCF 1414. A reference point may be a representation showing of the interaction that exists between the network function services.

In some embodiments, the system 1400 without the UE 1402 and RAN 1410 can be referred to as the fifth generation core network (5GC) or core network (CN).

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell^{®}, Microsoft^{®}, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel^{®}, AMD^{®}, or other "off-the-shelf' microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment of the present disclosure. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present disclosure may be referred to herein along with alternatives for the various components thereof. It is understood that such embodiments, examples, and alternatives are not to be construed as de facto equivalents of one another, but are to be considered as separate and autonomous representations of the present disclosure.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of embodiments of the disclosure. One skilled in the relevant art will recognize, however, that the disclosure may be practiced without one or more of the specific details, or with other methods, components, materials, etc. In other instances, well-known structures, materials, or operations are not shown or described in detail to avoid obscuring aspects of the disclosure.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects /etc. are merely described in one or more embodiments for clarity, and it is recognized that the parameters/attributes/aspects /etc. can be combined with or substituted for parameters/attributes/etc. of another embodiment unless specifically disclaimed herein.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the disclosure is not to be limited to the details given herein, but may be modified within the scope of the appended claims.

Those having skill in the art will appreciate that many changes may be made to the details of the above-described embodiments without departing from the underlying principles of the disclosure. The scope of the present disclosure should, therefore, be determined only by the following claims.

## Claims

1. A next generation node B, gNB, for providing access to 5G Core Network, 5GC, comprising:
a distributed unit, DU (306, 404, 406), configured to communicate with a user equipment, UE (601, 602, 1402), and route a set of messages through a user plane and a control plane, the set of messages comprising control plane messages and user plane messages;
a central unit control plane, CU-CP (102, 104, 106, 302, 402, 406), configured to process the control plane messages from the DU (306, 404, 406) and wherein the CU-CP (102,104,106, 302, 402, 406) has a control plane interface with the DU (306,404,406); and
a central unit user plane, CU-UP (104,108, 304, 404, 408), configured to process the user plane messages from the DU (306, 404, 406) and wherein the CU-UP (104, 108, 304, 404, 408) has a user plane interface with the DU (306, 404, 406), wherein the CU-CP (102, 104, 106, 302, 402, 406) is configured to:
perform RRC functions for the UE (601, 602,1402) wherein RRC messages from the DU meant for the CU-CP are first sent to, processed, and forwarded by the CU-UP, and RRC messages from the CU-CP meant for the DU first sent to, processed, and forwarded by the CU-UP;
perform air interface control for the UE (601, 602,1402);
perform RRM for the UE (601, 602,1402); and
support EPS mobility management, EMM, and EPS session management, ESM.

2. The gNB of claim 1, wherein the user plane interface is a F1-U (114, 314, 414) interface between the DU (306, 404, 406) and the CU-UP (104,108, 304, 404,408) and wherein the control plane interface is a F1-C (112, 312, 412) interface between the DU (306, 404, 406) and the CU-CP (102,104, 106,302,402,406).

3. The gNB of claim 1, further comprising:
a E1 interface, E1 (110, 310, 410), between the CU-CP (102,104,106, 302, 402,406) and the CU-UP (104,108,304,404,408);
an air interface, Uu (120,320, 420), between the UE (601, 602,1402) and the DU (306, 404, 406);
a NG-C control plane interface, NG-C (116, 316, 416), between the CU-CP (102,104,106,302,402,406) and the 5GC; and
a NG-U user plane interface, NG-U (118, 318, 418), between the CU-UP (104,108,304,404,408) and the 5GC.

4. The gNB of claim 1, wherein:
the DU (306, 404, 406) comprises a radio link control, RLC, layer (903), a media access control, MAC, layer (902) and a physical, PHY, layer (901);
the CU-UP (104, 108, 304, 404, 408) comprises a packet data convergence protocol, PDCP, layer (904); and
the CU-CP (102, 104, 106, 302, 402, 406) comprises a radio resource control, RRC, layer (905) and a radio resource management, RRM, layer.

5. The gNB of claim 1, wherein:
the DU (306, 404, 406) comprises a media access control, MAC, layer (902) and a physical, PHY, layer (901);
the CU-UP (104,108, 304, 404, 408) comprises a radio link control, RLC, layer (903) and a packet data convergence protocol, PDCP, layer (904); and
the CU-CP (102, 104, 106, 302, 402, 406) comprises a radio resource control, RRC, layer (905) and a radio resource management, RRM, layer.

6. The gNB of claim 1, wherein:
the DU (306, 404, 406) comprises a physical, PHY, layer (901);
the CU-UP (104, 108, 304, 404, 408) comprises a media access control, MAC, layer (902), a radio link control, RLC, layer (903) and a packet data convergence protocol, PDCP, layer (904); and
the CU-CP (102, 104, 106, 302, 402, 406) comprises a radio resource control, RRC, layer (905) and a radio resource management, RRM, layer.

7. The gNB of any of claims 1-6, wherein the CU-UP (104, 108, 304, 404, 408) further comprises a General Packet Radio Service Tunneling Protocol, GTP-U, end point (132) functionality.

8. The gNB of any of claims 1-6, wherein the CU-CP (102, 104, 106, 302, 402, 406) further comprises next generation application protocol, NG-AP (124), functionality.

9. The gNB of any of claims 1-6, wherein the CU-CP (102, 104, 106, 302, 402, 406) further comprises Xn application protocol, Xn-AP (128), functionality.

10. The gNB of any of claims 1-6, wherein the DU (306, 404, 406) is one of a set of DUs (306, 404, 406) configured to communicate with the CU-CP (102,104,106, 302, 402, 406) and CU-UP (104,108, 304, 404, 408).

11. The gNB of any of claims 1-6, wherein the DU (306, 404, 406) comprises a baseband processor configured to communicate with the UE (601, 602, 1402) and route the set of messages through the user plane and the control plane, the set of messages comprising the control plane messages and the user plane messages.

12. A method performed by a next generation node B, gNB, for providing access to 5G Core Network, 5GC, the method comprising:
communicating, by a distributed unit, DU (306, 404, 406), with a user equipment, UE (601, 602,1402);
routing, by the DU (306, 404, 406), a set of messages through a user plane and a control plane, the set of messages comprising control plane messages and user plane messages;
processing, by a central unit control plane, CU-CP (102, 104, 106, 302, 402, 406), the control plane messages from the DU (306, 404, 406), wherein the CU-CP (102, 104, 106, 302, 402, 406) has a control plane interface with the DU (306, 404, 406); and
processing, by the CU-UP (104, 108, 304, 404, 408), the user plane messages from the DU (306, 404, 406), wherein the CU-UP (104, 108, 304, 404,408) has a user plane interface with the DU (306, 404,406);
performing, by the CU-CP (102,104, 106, 302, 402, 406), RRC functions for the UE (601, 602,1402) wherein RRC messages from the DU meant for the CU-CP are first sent to, processed, and forwarded by the CU-UP, and RRC messages from the CU-CP meant for the DU first sent to, processed, and forwarded by the CU-UP;
performing, by the CU-CP (102, 104, 106, 302, 402, 406), air interface control for the UE (601, 602,1402);
performing, by the CU-CP (102, 104, 106, 302, 402, 406), RRM for the UE (601, 602,1402); and
supporting, by the CU-CP (102, 104, 106, 302, 402, 406), EPS mobility management, EMM, and EPS session management, ESM.

13. The method of claim 12, wherein:
the DU (306, 404, 406) comprises a radio link control, RLC, layer (903), a media access control, MAC, layer (902) and a physical, PHY, layer (901);
the CU-UP (104, 108, 304, 404, 408) comprises a packet data convergence protocol, PDCP, layer (904); and
the CU-CP (102, 104, 106, 302, 402, 406) comprises a radio resource control, RRC, layer (905) and a radio resource management, RRM, layer.

14. A machine readable medium comprising instructions which, when executed by a computer associated with a next generation node B, gNB, cause the gNB to carry out the method of claim 12.

15. An apparatus of a central unit control plane, CU-CP (102, 104, 106, 302, 402, 406), of a base station for providing access to a core network comprising:
a control plane interface, F1-C (112, 312, 412), interface to a distributed unit, DU (306, 404, 406), configured to communicate with a user equipment, UE (601, 602, 1402), and route a set of messages through a user plane interface, F1-U (114, 314, 414), and a control plane interface, F1-C (112, 312, 412), the set of messages comprising control plane messages and user plane messages;
a E1 interface, E1 (110, 310, 410), interface to a central unit user plane, CU-UP (104, 108, 304, 404, 408), configured to process the user plane messages from the DU (306, 404, 406);
a NG-C control-plane interface, NG-C (116, 316, 416), between the CU-CP (102,104,106, 302, 402, 406) and the core network; and
a processing unit configured to:
perform radio resource control, RRC, functions for the UE (601, 602, 1402) wherein RRC messages from the DU meant for the CU-CP are first sent to, processed, and forwarded by the CU-UP, and RRC messages from the CU-CP meant for the DU first sent to, processed, and forwarded by the CU-UP;_perform radio resource management, RRM, for the UE (601, 602, 1402); and
support evolved packet system, EPS, mobility management, EMM, and EPS session management, ESM.

## Patentansprüche

1. Knoten B der nächsten Generation, gNB, zum Bereitstellen von Zugang zu einem 5G-Kernnetzwerk, 5GC, umfassend:
eine verteilte Einheit, DU (306, 404, 406), die konfiguriert ist, um mit einem Benutzergerät, UE (601, 602, 1402), zu kommunizieren und einen Satz von Nachrichten durch eine Benutzerebene und eine Steuerebene zu leiten, wobei der Satz von Nachrichten Steuerebenennachrichten und Benutzerebenennachrichten umfasst;
eine Zentraleinheit-Steuerebene, CU-CP (102, 104, 106, 302, 402, 406), die konfiguriert ist, um die Steuerebenennachrichten von der DU (306, 404, 406) zu verarbeiten, und wobei die CU-CP (102, 104, 106, 302, 402, 406) eine Steuerebenenschnittstelle mit der DU (306, 404, 406) aufweist; und
eine Zentraleinheit-Benutzerebene, CU-UP (104, 108, 304, 404, 408), die konfiguriert ist, um die Benutzerebenennachrichten von der DU (306, 404, 406) zu verarbeiten, und wobei die CU-UP (104, 108, 304, 404, 408) eine Benutzerebenenschnittstelle mit der DU (306, 404, 406) aufweist, wobei die CU-CP (102, 104, 106, 302, 402, 406) konfiguriert ist zum:
Durchführen von RRC-Funktionen für das UE (601, 602, 1402), wobei RRC-Nachrichten von der DU, die für die CU-CP bestimmt sind, zuerst an die CU-UP gesendet, verarbeitet und weitergeleitet werden, und RRC-Nachrichten von der CU-CP, die für die DU bestimmt sind, zuerst an die CU-UP gesendet, verarbeitet und weitergeleitet werden;
Durchführen einer Luftschnittstellensteuerung für das UE (601, 602, 1402);
Durchführen von RRM für das UE (601, 602, 1402); und
Unterstützen von EPS-Mobilitätsmanagement, EMM, und EPS-Sitzungsmanagement, ESM.

2. gNB nach Anspruch 1, wobei die Benutzerebenenschnittstelle eine F1-U (114, 314, 414)-Schnittstelle zwischen der DU (306, 404, 406) und der CU-UP (104, 108, 304, 404, 408) ist und wobei die Steuerebenenschnittstelle eine F1-C (112, 312, 412)-Schnittstelle zwischen der DU (306, 404, 406) und der CU-CP (102, 104, 106, 302, 402, 406) ist.

3. gNB nach Anspruch 1, ferner umfassend:
eine E1-Schnittstelle, E1 (110, 310, 410), zwischen der CU-CP (102, 104, 106, 302, 402, 406) und der CU-UP (104, 108, 304, 404, 408);
eine Luftschnittstelle, Uu (120, 320, 420), zwischen dem UE (601, 602, 1402) und der DU (306, 404, 406);
eine NG-C-Steuerebenenschnittstelle, NG-C (116, 316, 416), zwischen der CU-CP (102, 104, 106, 302, 402, 406) und der 5GC; und
eine NG-U-Benutzerebenenschnittstelle, NG-U (118, 318, 418), zwischen der CU-UP (104, 108, 304, 404, 408) und der 5GC.

4. gNB nach Anspruch 1, wobei:
die DU (306, 404, 406) eine Funkverbindungssteuerungs-, RLC-, Schicht (903), eine Medienzugangssteuerungs-, MAC-, Schicht (902) und eine physikalische, PHY-, Schicht (901) umfasst;
die CU-UP (104, 108, 304, 404, 408) eine Paketdatenkonvergenzprotokoll-, PDCP-, Schicht (904) umfasst; und
die CU-CP (102, 104, 106, 302, 402, 406) eine Funkressourcensteuerungs-, RRC-, Schicht (905) und eine Funkressourcenmanagement-, RRM-, Schicht umfasst.

5. gNB nach Anspruch 1, wobei:
die DU (306, 404, 406) eine Medienzugangssteuerungs-, MAC-, Schicht (902) und eine physikalische, PHY-, Schicht (901) umfasst;
die CU-UP (104, 108, 304, 404, 408) eine Funkverbindungssteuerungs-, RLC-, Schicht (903) und eine Paketdatenkonvergenzprotokoll-, PDCP-, Schicht (904) umfasst; und
die CU-CP (102, 104, 106, 302, 402, 406) eine Funkressourcensteuerungs-, RRC-, Schicht (905) und eine Funkressourcenmanagement-, RRM-, Schicht umfasst.

6. gNB nach Anspruch 1, wobei:
die DU (306, 404, 406) eine physikalische, PHY-, Schicht (901) umfasst;
die CU-UP (104, 108, 304, 404, 408) eine Medienzugangssteuerungs-, MAC-, Schicht (902), eine Funkverbindungssteuerungs-, RLC-, Schicht (903) und eine Paketdatenkonvergenzprotokoll-, PDCP-, Schicht (904) umfasst; und
die CU-CP (102, 104, 106, 302, 402, 406) eine Funkressourcensteuerungs-, RRC-, Schicht (905) und eine Funkressourcenmanagement-, RRM-, Schicht umfasst.

7. gNB nach einem der Ansprüche 1-6, wobei die CU-UP (104, 108, 304, 404, 408) ferner eine General Packet Radio Service Tunneling Protocol-, GTP-U-, Endpunktfunktionalität (132) umfasst.

8. gNB nach einem der Ansprüche 1-6, wobei die CU-CP (102, 104, 106, 302, 402, 406) ferner eine Anwendungsprotokoll-, NG-AP-, Funktionalität der nächsten Generation (124) umfasst.

9. gNB nach einem der Ansprüche 1-6, wobei die CU-CP (102, 104, 106, 302, 402, 406) ferner eine Xn-Anwendungsprotokoll-, Xn-AP-, Funktionalität (128) umfasst.

10. gNB nach einem der Ansprüche 1-6, wobei die DU (306, 404, 406) eine aus einem Satz von DUs (306, 404, 406) ist, die konfiguriert sind, um mit der CU-CP (102, 104, 106, 302, 402, 406) und der CU-UP (104, 108, 304, 404, 408) zu kommunizieren.

11. gNB nach einem der Ansprüche 1-6, wobei die DU (306, 404, 406) einen Basisbandprozessor umfasst, der konfiguriert ist, um mit dem UE (601, 602, 1402) zu kommunizieren und den Satz von Nachrichten durch die Benutzerebene und die Steuerebene zu leiten, wobei der Satz von Nachrichten die Steuerebenennachrichten und die Benutzerebenennachrichten umfasst.

12. Verfahren, das von einem Knoten B der nächsten Generation, gNB, zum Bereitstellen von Zugang zu einem 5G-Kernnetzwerk, 5GC, durchgeführt wird, das Verfahren umfassend:
Kommunizieren, durch eine verteilte Einheit, DU (306, 404, 406), mit einem Benutzergerät, UE (601, 602, 1402);
Leiten, durch die DU (306, 404, 406), eines Satzes von Nachrichten durch eine Benutzerebene und eine Steuerebene, wobei der Satz von Nachrichten Steuerebenennachrichten und Benutzerebenennachrichten umfasst;
Verarbeiten, durch eine Zentraleinheit-Steuerebene, CU-CP (102, 104, 106, 302, 402, 406), der Steuerebenennachrichten von der DU (306, 404, 406), wobei die CU-CP (102, 104, 106, 302, 402, 406) eine Steuerebenenschnittstelle mit der DU (306, 404, 406) aufweist; und
Verarbeiten, durch die CU-UP (104, 108, 304, 404, 408), der Benutzerebenennachrichten von der DU (306, 404, 406), wobei die CU-UP (104, 108, 304, 404, 408) eine Benutzerebenenschnittstelle mit der DU (306, 404, 406) aufweist;
Durchführen, durch die CU-CP (102, 104, 106, 302, 402, 406), von RRC-Funktionen für das UE (601, 602, 1402), wobei RRC-Nachrichten von der DU, die für die CU-CP bestimmt sind, zuerst an die CU-UP gesendet, verarbeitet und weitergeleitet werden, und RRC-Nachrichten von der CU-CP, die für die DU bestimmt sind, zuerst an die CU-UP gesendet, verarbeitet und weitergeleitet werden;
Durchführen, durch die CU-CP (102, 104, 106, 302, 402, 406), einer Luftschnittstellensteuerung für das UE (601, 602, 1402);
Durchführen, durch die CU-CP (102, 104, 106, 302, 402, 406), von RRM für das UE (601, 602, 1402); und
Unterstützen, durch die CU-CP (102, 104, 106, 302, 402, 406), von EPS-Mobilitätsmanagement, EMM, und EPS-Sitzungsmanagement, ESM.

13. Verfahren nach Anspruch 12, wobei:
die DU (306, 404, 406) eine Funkverbindungssteuerungs-, RLC-, Schicht (903), eine Medienzugangssteuerungs-, MAC-, Schicht (902) und eine physikalische, PHY-, Schicht (901) umfasst;
die CU-UP (104, 108, 304, 404, 408) eine Paketdatenkonvergenzprotokoll-, PDCP-, Schicht (904) umfasst; und
die CU-CP (102, 104, 106, 302, 402, 406) eine Funkressourcensteuerungs-, RRC-, Schicht (905) und eine Funkressourcenmanagement-, RRM-, Schicht umfasst.

14. Maschinenlesbares Medium, umfassend Anweisungen, die, wenn sie von einem Computer ausgeführt werden, der mit einem Knoten B der nächsten Generation, gNB, assoziiert ist, den gNB veranlassen, das Verfahren nach Anspruch 12 auszuführen.

15. Vorrichtung einer Zentraleinheit-Steuerebene, CU-CP (102, 104, 106, 302, 402, 406), einer Basisstation zum Bereitstellen von Zugang zu einem Kernnetzwerk, umfassend:
eine Steuerebenenschnittstelle, F1-C (112, 312, 412), Schnittstelle zu einer verteilten Einheit, DU (306, 404, 406), die konfiguriert ist, um mit einem Benutzergerät, UE (601, 602, 1402), zu kommunizieren und einen Satz von Nachrichten durch eine Benutzerebenenschnittstelle, F1-U (114, 314, 414), und eine Steuerebenenschnittstelle, F1-C (112, 312, 412), zu leiten, wobei der Satz von Nachrichten Steuerebenennachrichten und Benutzerebenennachrichten umfasst;
eine E1-Schnittstelle, E1 (110, 310, 410), Schnittstelle zu einer Zentraleinheit-Benutzerebene, CU-UP (104, 108, 304, 404, 408), die konfiguriert ist, um die Benutzerebenennachrichten von der DU (306, 404, 406) zu verarbeiten;
eine NG-C-Steuerebenenschnittstelle, NG-C (116, 316, 416), zwischen der CU-CP (102, 104, 106, 302, 402, 406) und dem Kernnetzwerk; und
eine Verarbeitungseinheit, die konfiguriert ist zum:
Durchführen von Funkressourcensteuerungs-, RRC-, Funktionen für das UE (601, 602, 1402), wobei RRC-Nachrichten von der DU, die für die CU-CP bestimmt sind, zuerst an die CU-UP gesendet, verarbeitet und weitergeleitet werden, und RRC-Nachrichten von der CU-CP, die für die DU bestimmt sind, zuerst an die CU-UP gesendet, verarbeitet und weitergeleitet werden; Durchführen von Funkressourcenmanagement, RRM, für das UE (601, 602, 1402); und
Unterstützen von Evolved Packet System, EPS, Mobilitätsmanagement, EMM, und EPS-Sitzungsmanagement, ESM.

## Revendications

1. Un nœud B de prochaine génération, gNB, pour donner accès à un réseau central 5G, 5GC, comprenant :
une unité distribuée, DU (306, 404, 406), configurée pour communiquer avec un équipement utilisateur, UE (601, 602, 1402), et acheminer un ensemble de messages via un plan utilisateur et un plan de contrôle, l'ensemble de messages comprenant des messages de plan de contrôle et des messages de plan utilisateur ;
un plan de contrôle d'unité centrale, CU-CP (102, 104, 106, 302, 402, 406), configuré pour traiter les messages de plan de contrôle provenant de la DU (306, 404, 406) et dans lequel le CU-CP (102, 104, 106, 302, 402, 406) a une interface de plan de contrôle avec la DU (306, 404, 406) ; et
un plan utilisateur d'unité centrale, CU-UP (104, 108, 304, 404, 408), configuré pour traiter les messages de plan utilisateur provenant de la DU (306, 404, 406) et dans lequel le CU-UP (104, 108, 304, 404, 408) a une interface de plan utilisateur avec la DU (306, 404, 406), dans lequel le CU-CP (102, 104, 106, 302, 402, 406) est configuré pour :
réaliser des fonctions RRC pour l'UE (601, 602, 1402), dans lequel des messages RRC provenant de la DU destinés au CU-CP sont d'abord envoyés au CU-UP, traités et transmis par celui-ci, et des messages RRC provenant du CU-CP destinés à la DU sont d'abord envoyés au CU-UP, traités et transmis par celui-ci ;
réaliser un contrôle d'interface radio pour l'UE (601, 602, 1402) ;
réaliser une RRM pour l'UE (601, 602, 1402) ; et
prendre en charge une gestion de mobilité EPS, EMM, et une gestion de session EPS, ESM.

2. Le gNB selon la revendication 1, dans lequel l'interface de plan utilisateur est une interface F1-U (114, 314, 414) entre la DU (306, 404, 406) et le CU-UP (104, 108, 304, 404, 408) et dans lequel l'interface de plan de contrôle est une interface F1-C (112, 312, 412) entre la DU (306, 404, 406) et le CU-CP (102, 104, 106, 302, 402, 406).

3. Le gNB selon la revendication 1, comprenant en outre :
une interface E1, E1 (110, 310, 410), entre le CU-CP (102, 104, 106, 302, 402, 406) et le CU-UP (104, 108, 304, 404, 408) ;
une interface radio, Uu (120, 320, 420) entre l'UE (601, 602, 1402) et la DU (306, 404, 406) ;
une interface de plan de contrôle NG-C, NG-C (116, 316, 416), entre le CU-CP (102, 104, 106, 302, 402, 406) et le 5GC ; et
une interface de plan utilisateur NG-U, NG-U (118, 318, 418), entre le CU-UP (104, 108, 304, 404, 408) et le 5GC.

4. Le gNB selon la revendication 1, dans lequel :
la DU (306, 404, 406) comprend une couche de contrôle de liaison radio, RLC, (903), une couche de contrôle d'accès au support, MAC, (902) et une couche physique, PHY, (901) ;
le CU-UP (104, 108, 304, 404, 408) comprend une couche de protocole de convergence de données par paquets, PDCP, (904) ; et
le CU-CP (102, 104, 106, 302, 402, 406) comprend une couche de contrôle de ressource radio, RRC, (905) et une couche de gestion de ressource radio, RRM.

5. Le gNB selon la revendication 1, dans lequel :
la DU (306, 404, 406) comprend une couche de contrôle d'accès au support, MAC, (902) et une couche physique, PHY, (901) ;
le CU-UP (104, 108, 304, 404, 408) comprend une couche de contrôle de liaison radio, RLC, (903) et une couche de protocole de convergence de données par paquets, PDCP, (904) ; et
le CU-CP (102, 104, 106, 302, 402, 406) comprend une couche de contrôle de ressource radio, RRC, (905) et une couche de gestion de ressource radio, RRM.

6. Le gNB selon la revendication 1, dans lequel :
la DU (306, 404, 406) comprend une couche physique, PHY, (901) ;
le CU-UP (104, 108, 304, 404, 408) comprend une couche de contrôle d'accès au support, MAC, (902), une couche de contrôle de liaison radio, RLC, (903) et une couche de protocole de convergence de données par paquets, PDCP, (904) ; et
le CU-CP (102, 104, 106, 302, 402, 406) comprend une couche de contrôle de ressource radio, RRC, (905) et une couche de gestion de ressource radio, RRM.

7. Le gNB selon une des revendications 1 à 6, dans lequel le CU-UP (104, 108, 304, 404, 408) comprend en outre une fonctionnalité de point de terminaison de Protocole de tunnellisation de Service général de radiocommunication en mode paquet, GTP-U, (132).

8. Le gNB selon une des revendications 1 à 6, dans lequel le CU-CP (102, 104, 106, 302, 402, 406) comprend en outre une fonctionnalité de protocole d'application de prochaine génération, NG-AP (124).

9. Le gNB selon une des revendications 1 à 6, dans lequel le CU-CP (102, 104, 106, 302, 402, 406) comprend en outre une fonctionnalité de protocole d'application Xn, Xn-AP (128) .

10. Le gNB selon une des revendications 1 à 6, dans lequel la DU (306, 404, 406) est une d'un ensemble de DU (306, 404, 406) configurées pour communiquer avec le CU-CP (102, 104, 106, 302, 402, 406) et le CU-UP (104, 108, 304, 404, 408) .

11. Le gNB selon une des revendications 1 à 6, dans lequel la DU (306, 404, 406) comprend un processeur en bande de base configuré pour communiquer avec l'UE (601, 602, 1402) et acheminer l'ensemble de messages via le plan utilisateur et le plan de contrôle, l'ensemble de messages comprenant les messages de plan de contrôle et les messages de plan utilisateur.

12. Un procédé réalisé par un noeud B de prochaine génération, gNB, pour donner accès à un réseau central 5G, 5GC, le procédé comprenant :
la communication, par une unité distribuée, DU (306, 404, 406), avec un équipement utilisateur, UE (601, 602, 1402) ;
l'acheminement, par la DU (306, 404, 406), d'un ensemble de messages via un plan utilisateur et un plan de contrôle, l'ensemble de messages comprenant des messages de plan de contrôle et des messages de plan utilisateur ;
le traitement, par un plan de contrôle d'unité centrale, CU-CP (102, 104, 106, 302, 402, 406), des messages de plan de contrôle provenant de la DU (306, 404, 406), dans lequel le CU-CP (102, 104, 106, 302, 402, 406) a une interface de plan de contrôle avec la DU (306, 404, 406) ; et
le traitement, par le CU-UP (104, 108, 304, 404, 408), des messages de plan utilisateur provenant de la DU (306, 404, 406), dans lequel le CU-UP (104, 108, 304, 404, 408) a une interface de plan utilisateur avec la DU (306, 404, 406) ;
la réalisation, par le CU-CP (102, 104, 106, 302, 402, 406), de fonctions RRC pour l'UE (601, 602, 1402), dans lequel des messages RRC provenant de la DU destinés au CU-CP sont d'abord envoyés au CU-UP, traités et transmis par celui-ci, et des messages RRC provenant de la DU destinés au CU-CP sont d'abord envoyés au CU-UP, traités et transmis par celui-ci ;
la réalisation, par le CU-CP (102, 104, 106, 302, 402, 406), d'un contrôle d'interface radio pour l'UE (601, 602, 1402) ;
la réalisation, par le CU-CP (102, 104, 106, 302, 402, 406), d'une RRM pour l'UE (601, 602, 1402) ; et
la prise en charge, par le CU-CP (102, 104, 106, 302, 402, 406), d'une gestion de mobilité EPS, EMM, et d'une gestion de session EPS, ESM.

13. Le procédé selon la revendication 12, dans lequel :
la DU (306, 404, 406) comprend une couche de contrôle de liaison radio, RLC, (903), une couche de contrôle d'accès au support, MAC, (902) et une couche physique, PHY, (901) ;
le CU-UP (104, 108, 304, 404, 408) comprend une couche de protocole de convergence de données par paquets, PDCP, (904) ; et
le CU-CP (102, 104, 106, 302, 402, 406) comprend une couche de contrôle de ressource radio, RRC, (905) et une couche de gestion de ressource radio, RRM.

14. Un support lisible par machine comprenant des instructions qui, quand elles sont exécutées par un calculateur associé à un noeud B de prochaine génération, gNB, amènent le gNB à réaliser le procédé selon la revendication 12.

15. Un appareil d'un plan de contrôle d'unité centrale, CU-CP (102, 104, 106, 302, 402, 406), d'une station de base pour donner accès à un réseau central, comprenant :
une interface de plan de contrôle, F1-C (112, 312, 412), vers une unité distribuée, DU (306, 404, 406), configurée pour communiquer avec un équipement utilisateur, UE (601, 602, 1402), et acheminer un ensemble de messages via une interface de plan utilisateur, F1-U (114, 314, 414), et une interface de plan de contrôle, F1-C (112, 312, 412), l'ensemble de messages comprenant des messages de plan de contrôle et des messages de plan utilisateur ;
une interface E1, E1 (110, 310, 410), vers un plan utilisateur d'unité centrale, CU-UP (104, 108, 304, 404, 408), configuré pour traiter les messages de plan utilisateur provenant de la DU (306, 404, 406) ;
une interface de plan de contrôle NG-C, NG-C (116, 316, 416), entre le CU-CP (102, 104, 106, 302, 402, 406) et le réseau central ; et
une unité de traitement configurée pour :
réaliser des fonctions de contrôle de ressource radio, RRC, pour l'UE (601, 602, 1402), dans lequel des messages RRC provenant de la DU destinés au CU-CP sont d'abord envoyés au CU-UP, traités et transmis par celui-ci, et des messages RRC provenant du CU-CP destinés à la DU sont d'abord envoyés au CU-UP, traités et transmis par celui-ci ;
réaliser une gestion de ressource radio, RRM, pour l'UE (601, 602, 1402) ; et
prendre en charge une gestion de mobilité de système en mode paquet évolué, EPS, EMM, et une gestion de session EPS, ESM.
